# EUROPEAN PATENT SPECIFICATION

(11) **EP 2 442 748 B1**
(45) Date of publication and mention of the grant of the patent: **20.09.2017**
(21) Application number: 10789099.8
(22) Date of filing: 24.03.2010
(51) Int. Cl.: A61C 19/00, A61C 8/00

(54) **Apparatus for Sinus Lift and Lateral Ridge Augmentation**
Vorrichtung zur Anhebung der Kieferhöhle und zur Verstärkung des seitlichenKkieferkamms
Appareil pour l'élévation du plancher du sinus maxillaire et l'augmentation de la crête alvéolaire

(30) Priority: 16.06.2009 US 485199; 29.09.2009 WO PCT/IL2009/000931
(43) Date of publication of application: 25.04.2012
(73) Proprietor: Maxillent Ltd., 46766 Herzliya (IL)
(72) Inventor: BETTER, Hadar, 69400 Tel Aviv (IL); FOSTICK, Gideon, 5403614 Givat Shmuel (IL); UCHITEL, Ilan, 44233 Kfar Saba (IL); GROSS, Yossi, 73160 Moshav Mazor (IL)
(74) Representative: White, Duncan Rohan
(86) International application number: PCT/IL2010/000252
(87) International publication number: WO 2010/146573

(56) References cited:
- US-A- 4 112 944
- US-A- 5 291 914
- US-A1- 2003 228 556
- US-A1- 2006 084 034
- US-A1- 2008 319 466
- US-A1- 2008 319 466
- US-B1- 7 100 476

## Description

### FIELD OF THE APPLICATION

The present invention relates generally to dental implants, and specifically to minimally-invasive implants for sinus lift and lateral ridge augmentation procedures.

### BACKGROUND OF THE APPLICATION

Osseointegrated dental implants are typically metallic or ceramic screws that are placed in the jawbone for supporting artificial teeth after the loss of natural teeth. Replacement of the maxillary teeth is often a challenging surgical procedure when the remaining maxillary bone has insufficient height to support the implant. One surgical technique for augmenting the maxillary bone includes injecting a regenerative material, such as autogenic, allogeneic, xenogeneic, or synthetic bone graft, into the vicinity of the maxillary bone. The regenerative material forms additional bone mass that integrates with the existing maxillary bone, providing the necessary alveolar height to support the implant.

Bone augmentation procedures are often surgically difficult to perform, and are associated with complications, including infection of the maxillary sinus. The top of the maxillary alveolar ridge forms the floor of the maxillary sinus, and is covered by a thin membrane known as the Schneiderian or subantral membrane. In one surgical procedure, known as a closed or internal sinus lift or elevation procedure, the surgeon drills a bore through the maxillary alveolar ridge from the oral cavity at the desired location of the implant. The bore penetrates the ridge to below the Schneiderian membrane. The surgeon injects the regenerative material through the bore to below the membrane, forming a cavity defined by the top of the ridge and the bottom of the membrane, which cavity occupies a portion of the space initially occupied by the maxillary sinus.

To prevent potentially serious complications, the surgeon must be careful not to perforate the Schneiderian membrane. This is often difficult, because of the delicacy of the membrane, and the restricted access afforded by the closed approach.

Sotirakis E, in an article entitled, "A different method for elevation of the floor of the maxillary sinus: Experimental study and reference to some cases," Mediterranean Dental Implant Congress (Athens, Greece), Scientific Programme MDIC (2004), describes a surgical procedure for elevating the antral floor using hydraulic pressure applied with a medical syringe. The procedure was first tested experimentally on hen's eggs as a surrogate sinus, and subsequently on human cadaver preparations.

Chen L et al., in an article entitled, "An 8-year retrospective study: 1,100 patients receiving 1,557 implants using the minimally invasive hydraulic sinus condensing technique," J Periodontol 76:482-491 (2005), describe an internal crestal approach for performing sinus lift and placing endosseous implants. Sinus burs and condensers of increasing width were used in conjunction with pliable atraumatic bone grafting mixture and hydraulic pressure from a surgical handpiece. The risk of membrane perforation was reduced using the surgeon's tactile skill administered in a two-stage process to first loosen and then graft bone particulate under the Schneiderian membrane. Threaded implants were placed during the same procedure, and secured via primary closure.

US Patent Application Publication 2006/0084034 to Hochman describes techniques for providing implants in the upper jaw. A sleeve is inserted through the alveolar ridge to the maxillary sinus. The sleeve is used to raise the subantral membrane and form a cavity. A filler, such as a bone growth stimulant, is injected through the sleeve into the cavity. In the process, the sleeve also can cut and/or condense the bone around itself so that the bone can hold an implant. Optionally, the bone growth stimulant is also introduced into the bone surrounding the sleeve. During the injection, the pressure within the sleeve or the cavity is monitored to detect and prevent the rupture of the subantral membrane.

US Patent Application Publication 2006/0172255 to Hochman et al. describes a surgical tool used for preparing a surgical sinus-lift osteotomy. The tool has a defined thread geometry in series with an osteotome tip to cut, crack and push bone from the sinus floor upward into the sinus cavity in a tactual, gentle and controlled motion. The apical osteotome tip is driven into a pre-drilled pilot osteotomy after the cutting threads are engaged and rotated until the sinus floor is cracked free. Once the bony sinus floor is cracked free, a fluid passageway can be pressurized with a sterile fluid at a defined pressure to release and push the sinus membrane upward into the sinus cavity to create a desired apical cavity for grafting.

US Patent Application Publication 2003/0175656 to Livne et al. describes a dental implant that comprises a generally rod-like article formed with one or more hollow(s) therein and a biodegradable hydrogel containing one or more bone growth-promoting agent(s) in the hollow(s). Also described are a method of implanting the dental implant and a method of sinus augmentation prior to implanting a dental implant.

The following references may be of interest:
US Patent 4,431,416 to Niznick
US Patent 5,261,818 to Shaw
US Patent 5,456,601 to Sendax
US Patent 5,481,260 to Buckler et al.
US Patent 5,575,650 to Niznick et al.
US Patent 5,685,716 to Linkow
US Patent 5,711,315 to Jerusalmy
US Patent 5,759,036 to Hinds
US Patent 5,782,918 to Klardie et al.
US Patent 5,795,160 to Hahn et al.
US Patent 5,829,977 to Rogers et al.
US Patent 5,839,899 to Robinson
US Patent 5,879,161 to Lazzara
US Patent 5,967,777 to Klein et al.
US Patent 5,989,025 to Conley
US Patent 6,068,479 to Kwan
US Patent 6,159,161 to Hodosh
US Patent 6,273,720 to Spalten
US Patent 6,758,673 to Fromovich et al.
US Patent 7,297,102 to Smith et al.
US Patent 7,364,430 to Kitamura et al.
US Patent 7,396,232 to Fromovich et al.
US Patent 7,510,397 to Hochman
US Patent Application Publication 2003/0105469 to Karmon
US Patent Application Publication 2003/0232308 to Simmons, Jr.
US Patent Application Publication 2007/0162024 to Siemonsmeier
US Provisional Application 60/619,542 to Hochman
PCT Publication WO 07/080595 to Levi et al.
PCT Publication WO 07/114553 to Ahn
European Application Publication EP 1 174 094 A1 to Katayama et al.
Branemark System^{®} product description, Nobel Biocare^{™} AB (Zurich, Switzerland) (downloaded from http://wwwl.nobelbiocare.com/en/implants-and-abutments/products/parallelled-walled-implants/Branemark-system.aspx on March 12, 2010)
Flanagan D, "Important arterial supply of the mandible, control of an arterial hemorrhage, and report of a hemorrhagic incident," J Oral Implantol 29(4):165-73 (2003)
Muronoi M et al., "Simplified procedure for augmentation of the sinus floor using a haemostatic nasal balloon," British Journal Of Oral & Maxillofacial Surgery 41(2):120-121(2003)
NobelActive^{™} External Connection product catalog, Nobel Biocare^{™} AB (Zurich, Switzerland) (2007)
Pjetursson et al., "Maxillary sinus floor elevation using the (transalveolar) osteotome technique with or without grafting material. Part I: implant survival and patients' perception," Clin Oral Impl Res 20:667-676 (2009)
Riley ET et al., "The Episure syringe: a novel loss of resistance syringe for locating the epidural space," Anesth Analg 105(4):1164-6 (October 2007)
Tapered Screw-Vent® Implant System product catalog, Zimmer Dental Inc. (Carlsbad, CA, USA) (2008)
Vercellotti T, "Piezoelectric surgery in implantology: a case report--a new piezoelectric ridge expansion technique," Int J Periodontics Restorative Dent 20(4):358-65 (2000)
Vercellotti T et al., "The Piezoelectric Bony Window Osteotomy and Sinus Membrane Elevation: Introduction of a New Technique for Simplification of the Sinus Augmentation Procedure," Int J Periodontics Restorative Dent 21(6):561-7 (2001) US 2008/319466 A1 discloses an apparatus for sinus lifting comprising a dental implant having a lateral opening.

### SUMMARY OF APPLICATIONS

The apparatus of the present invention is defined by appended claim 1.

Further embodiments are defined in the appended dependent claims 2-14.

### BRIEF DESCRIPTION OF THE DRAWINGS

Figs. 1A-C are schematic illustrations of a dental implant system, in accordance with an embodiment of the present invention;
Figs. 2A-C are schematic illustrations of alternative configurations of a dental implant of the dental implant system of Figs. 1A-C, in accordance with respective applications of the present invention;
Figs. 3A-D are schematic illustrations of alternative configurations of the implant of Figs. 1A-C and an applicator in which the distal end of a delivery tube is initially welded to the implant, in accordance with respective applications of the present invention;
Fig. 4 is a schematic illustration of a rotation breaking tool, in accordance with an application of the present invention;
Figs. 5A-B are schematic side-views of the rotation breaking tool of Fig. 4, in accordance with an application of the present invention;
Figs. 6A-B are schematic illustrations of the rotation breaking tool of Fig. 4 coupled to the implant of Figs. 1A-C, in accordance with an application of the present invention;
Fig. 7 is a schematic illustration of another configuration of a rotation breaking tool, in accordance with an application of the present invention;
Figs. 8A-B are schematic illustrations of the rotation breaking tool of Fig. 7 coupled to the implant of Figs. 1A-C, in accordance with an application of the present invention;
Figs. 9A-B are schematic isometric and cross-sectional illustrations, respectively, of yet another configuration of a rotation breaking tool, in accordance with an application of the present invention;
Figs. 10A-B are schematic illustrations of a first component of the breaking tool of Figs. 9A-B, in accordance with an application of the present invention;
Figs. 11A-D are schematic illustrations of a second component of the breaking tool of Figs. 9A-B, in accordance with an application of the present invention;
Figs. 12 is a schematic illustration of still another configuration of a rotation breaking tool, in accordance with an application of the present invention;
Fig. 13 is a schematic cross-sectional illustration of the rotation breaking tool of Fig. 12, in accordance with an application of the present invention;
Fig 14 is a schematic cross-sectional illustration of a distal end of the rotation breaking tool of Fig. 12, in accordance with an application of the present invention;
Fig. 15 is a schematic illustration of a dental implant and an applicator comprising a retaining element in a first position, in accordance with an application of the present invention;
Fig. 16 is a schematic cross-sectional illustration of the implant and applicator of Fig. 15, in accordance with an application of the present invention;
Figs. 17A-E are schematic views from respective directions of the implant and applicator of Fig. 15 in a second position, in accordance with an application of the present invention;
Fig. 18 is a schematic cross-sectional view of Fig. 17A, in accordance with an application of the present invention;
Figs. 19A-C are schematic illustrations of another configuration of a dental implant, an applicator, and a retaining element in a second position, in accordance with an application of the present invention;
Fig. 20 is a schematic illustration of the implant, applicator and retaining element of Figs. 19A-C in a first position, in accordance with an application of the present invention;
Figs. 21A-D, 22A-B, 23, and 24 are schematic illustrations of a dental implant and an applicator in which the distal end of a delivery tube is initially welded to the implant, in accordance with an application of the present invention;
Figs. 25A-G are schematic illustrations of several steps of a minimally-invasive closed sinus lift surgical procedure for implanting a dental implant, in accordance with an application of the present invention;
Figs. 25H-J are schematic illustration of alternative techniques for injecting regenerative material, in accordance with an application of the present invention;
Figs. 26A-B are schematic illustrations of several steps of another minimally-invasive closed sinus lift surgical procedure for implanting a dental implant, in accordance with an application of the present invention;
Figs. 27A and 27B are schematic illustrations of tools and techniques, respectively, for decoupling a delivery tube from the implant of Figs. 21A-24, in accordance with an application of the present invention;
Figs. 27C and 27D-E are schematic illustrations of a tool and techniques, respectively, for decoupling the applicator from the implant of Figs. 21A-24, in accordance with an application of the present invention;
Figs. 28A-B are schematic lateral and head-on illustrations, respectively, of a configuration of a distal surface of the dental implant of Figs. 1A-C, in accordance with an application of the present invention; and
Figs. 29A-F are schematic illustrations of several steps of a minimally-invasive closed lateral ridge augmentation surgical procedure for implanting a dental implant, in accordance with an application of the present invention.

### DETAILED DESCRIPTION OF APPLICATIONS

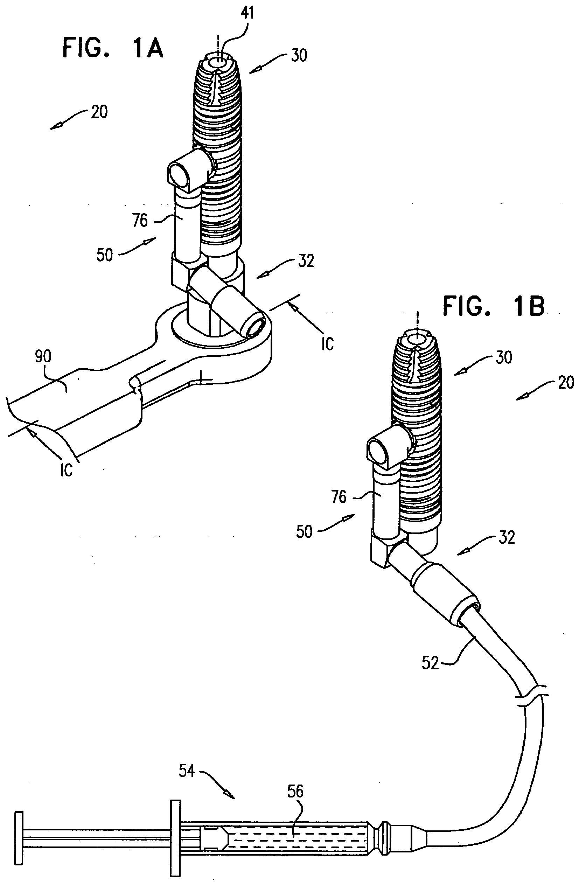

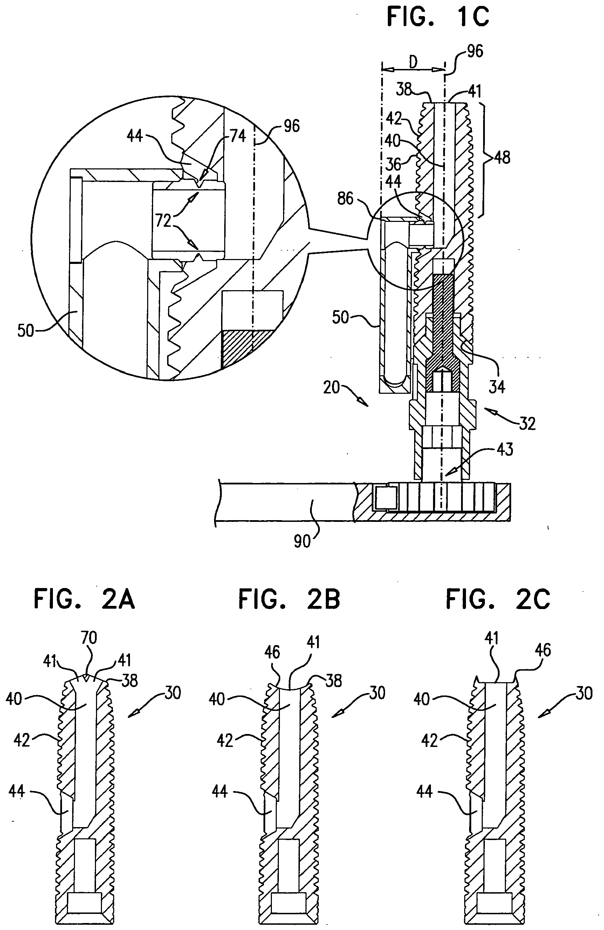

Figs. 1A-C are schematic illustrations of a dental implant system 20, in accordance with an embodiment of the present invention. Figs. 1A-B are isometric views of the system, and Fig. 1C is a cross-sectional view of Fig. 1A along line IC—IC. System 20 comprises a dental implant 30, which is typically shaped so as to define a lumen 40 therethrough that is open through a distal opening 41 to a distal portion 48 of the implant that extends from a distal implant end 38 of the implant along up to 50% of a longitudinal length of the implant, such as up to 30% of the length, up to 15% of the length, or up to 5% of the length. For some applications, distal portion 48 has a longitudinal length of up to 8 mm, such as up to 6 mm, up to 4 mm, or up to 2 mm, e.g., 5 mm or 8 mm. As used herein, including in the claims, the "distal" end of the implant is the end that is inserted first into a bone, such as an alveolar ridge, and is sometimes referred to in the art as the apical end, and the "proximal" end of the implant is the end of the implant opposite the distal end, e.g., that faces the oral cavity, and is sometimes referred to in the art as the coronal end. Similarly, "distal" means situated toward the distal end of the implant, and "proximal" means situated toward the proximal end of the implant.

Distal opening 41 may be located at distal implant end 38, such as centered on the distal implant end, e.g., at a distal tip of distal implant end 38, or not centered on the distal implant end (and thus located at a location other than the distal tip), such as described hereinbelow with reference to Fig. 2A. Alternatively, distal opening(s) 41 may be located at one or more locations along distal implant portion 48, including at locations on lateral surface 42. For some applications, the lumen is open to the distal end via a plurality of openings 41, which for some applications results in a more even distribution of regenerative material in the cavity between the ridge and the Schneiderian membrane, as described hereinbelow, and/or permits passage of the regenerative material even if some of the openings should become blocked with bone particles. Dental implant 30 is typically generally cylindrical, tapered, or conic in shape, other than the lumen, and typically comprises a metal such as titanium, or a ceramic, such as a zirconia (zirconium dioxide) ceramic. The implant may have a greatest diameter of between about 2 and about 7 mm, and may be provided in a variety of longitudinal lengths, e.g., between about 7 and about 18 mm, e.g., between about 12 and about 16 mm, such as about 15 mm. For some applications, the implant has a longitudinal length of less than 20 mm and a greatest diameter of less than 10 mm.

For some applications, dental implant 30 comprises a self-tapping osseointegrated dental implant. For these applications, at least a portion of a lateral external surface 42 of implant 30 is typically shaped so as to define a cutting surface, e.g., a screw thread 36, or other connecting element. For example, the portion may be in a vicinity of a distal end 38 of the implant, or may include all or nearly all of the lateral surface.

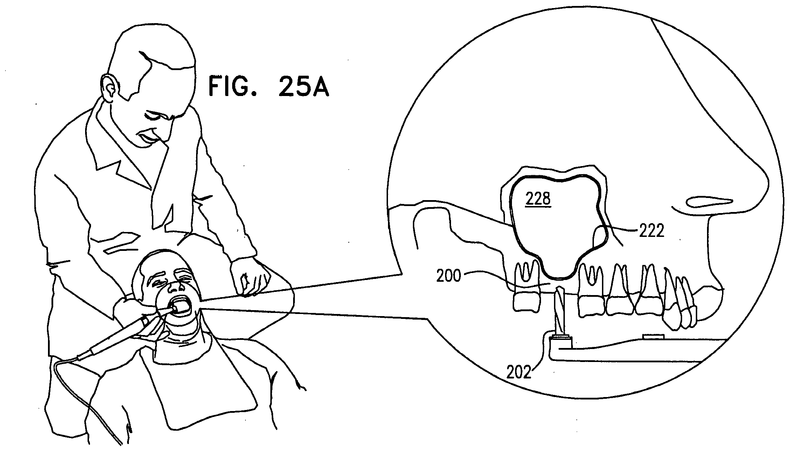

For some applications, system 20 comprises an applicator 32 that is removably coupled to a proximal end 34 of implant 30. For some applications, applicator 32 is shaped so as to define a distal male coupling element, e.g., a hexagonal head, that is inserted into a correspondingly shaped proximal female coupling element, e.g., a hexagonal socket, defined by dental implant 30. Friction between the head and socket removably couples the implant to the applicator. Alternatively, another coupling element removably couples the implant to the applicator. A proximal end of applicator 32 is typically shaped so as to define a coupling element 43, such as a female coupling element (as shown in Fig. 1), e.g., a hexagonal or square socket, or a male coupling element (configuration not shown), e.g., a hexagonal or square head. During an implantation procedure, such as described hereinbelow with reference to Figs. 25A-J, 26A-B, 27A-E, and 29A-F, the gloved hand of the surgeon generally touches the applicator, rather than the implant itself. System 20 is typically packaged and provided to the surgeon with the applicator 32 coupled to implant 30.

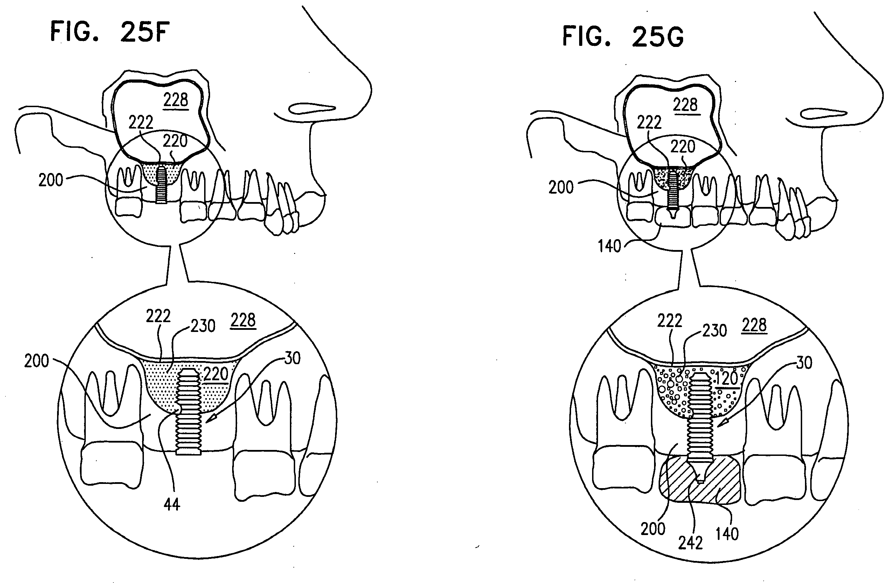

Typically, implant 30 comprises a two-stage implant. The surgeon couples an abutment to the proximal end of the implant after osseointegration of the implant, as is known in the art, such as described hereinbelow with reference to Fig. 25G. Alternatively, implant 30 comprises a single-stage transgingival implant, which is shaped so as to define an integrated abutment, as is known in the art.

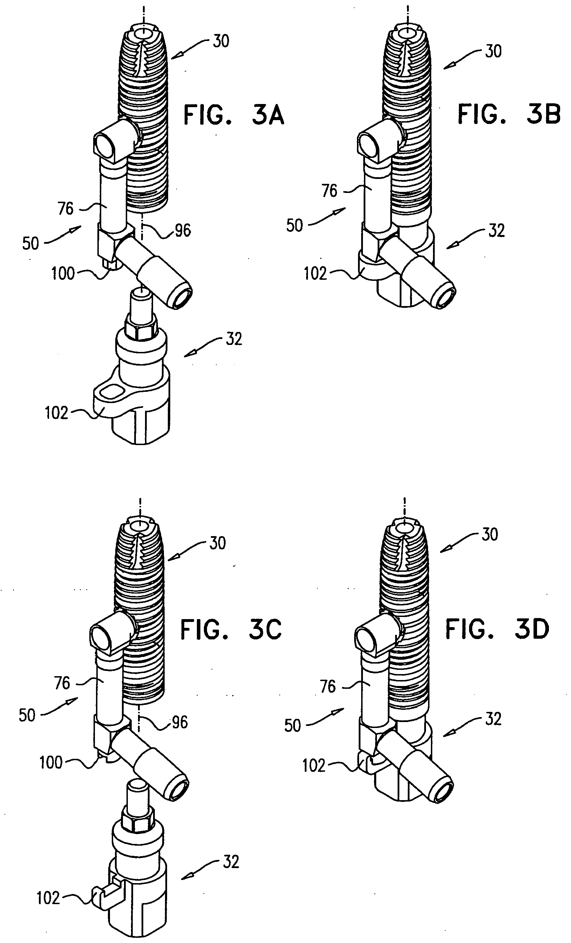

For some applications, as shown in Figs. 1A-C (and in Figs. 3A-D, 15-18, 19A-20, 21A-24, and 28A-B hereinbelow), a proximal end of lumen 40 has a lateral opening 44 (typically exactly one lateral opening) through lateral external surface 42 of the implant, and the lumen is not open to a proximal external surface of the implant within 2 mm of a proximal-most part of implant 30. For some applications, the lumen is not open to the proximal external surface within 3 mm of the proximal-most part of the implant. Implant 30 is typically permanently closed within 3 mm of the proximal-most part of the implant, for these applications. Alternatively, the proximal end of lumen 40 is open to proximal implant end 34. Typically, the lateral opening is at least 1.5 mm from distal implant end 38, such as at least 2 mm (e.g., 8 mm from the distal implant end). Typically, the lateral opening is at least 2 mm from the proximal implant end, such as at least 3 mm or at least 4 mm.

System 20 further comprises a delivery tube 50, a distal end of which is coupled to lumen 40 via lateral opening 44.

For some applications, as best seen in the blow-up in Fig. 1C, a portion 72 of the wall of delivery tube 50 is thinner than the wall immediately adjacent to the portion, such that application of a breaking torque to the delivery tube breaks the delivery tube at the thinner portion, thereby decoupling the delivery tube from the implant. Typically, the thinner portion is within 3 mm of the distal end of the delivery tube, such as within 2 mm or within 1 mm of the distal end. The thinner portion is typically recessed into lateral external surface 42 of the implant. For some applications, at least a portion of the lateral surface that includes lateral opening 44 is shaped so as to define screw thread 36. For these applications, the thinner portion is recessed into the lateral external surface below the raised helical rib of screw thread 36. As a result, the small distal broken portion of the delivery tube that remains coupled to the implant after the delivery tube is broken does not interfere with the functioning of screw thread 36.

Typically, thinner portion 72 of delivery tube 50 is sufficiently thin such that the application of a breaking torque of less than 50 Newton centimeters (Ncm) breaks the delivery tube at the thinner portion. For some applications, the thinner portion has a width of less than 0.1 mm, such as less than 0.05 mm.

In this application of the present invention (and in some other applications of the present invention), delivery tube 50 typically comprises a rigid material, such as metal (e..g, titanium). For some applications, the delivery tube is shaped so as to be circumscribed with a groove 74 that defines thinner portion 72. For example, the tube may be manufactured by scoring the implant to form the groove that serves as the thinner portion. Typically, the groove is V-shaped, such that application of the breaking torque causes a concentration of force to be applied at the tip of the V, thereby breaking the delivery tube at the groove.

For some applications, the delivery tube is shaped so as to define a bend 86 at between about 5 and about 20 mm from the distal tube end, such as within about 10 mm of the distal tube end. For example, the bend may have an angle of between about 85 and about 95 degrees.

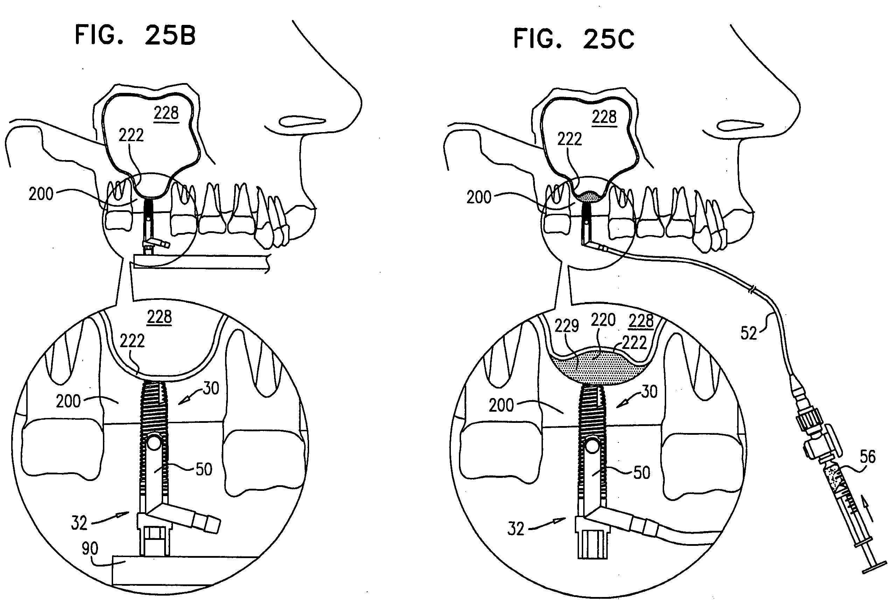

Typically, when delivery tube 50 is coupled to the implant prior to breaking of thinner portion 72, portion 76 of the delivery tube runs alongside the implant such that, as shown in Fig. 1C, a greatest distance D between a longitudinal axis 96 of the implant and a surface of portion 76 of the delivery tube furthest from the longitudinal axis is less than 6 mm, such as less than 5 mm. Such a small distance allows the implant and delivery tube to be readily placed between adjacent teeth during an implantation procedure, such as described hereinbelow with reference to Figs. 25B-E.

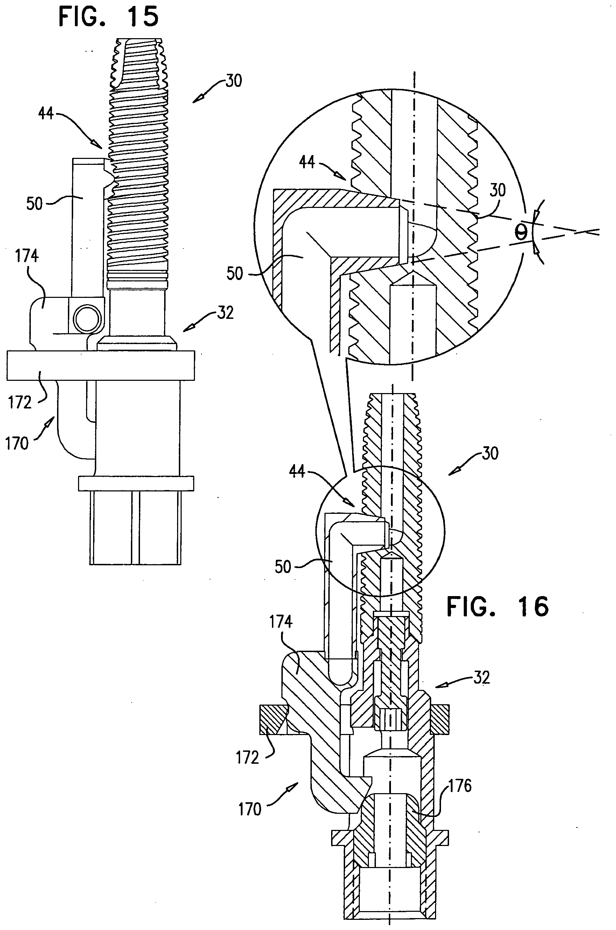

Alternatively, the delivery tube may be coupled to the lumen using a miniature luer connector, by friction, using a removable coupling element, or as described hereinbelow with reference to Figs. 15-18 or 19A-20. Alternatively, the tube may screw into the lumen, so as to be rotationally secured to the implant throughout the implantation procedure. Further alternatively or additionally, the distal end of delivery tube 50 comprises a sealing element, which is configured to removably sealingly couple delivery tube 50 to implant 30. For example, the sealing element may comprise an o-ring or a gasket.

As shown in Figs. 1A and 1C, during a portion of an implantation procedure, a rotation tool 90 is coupled to coupling element 43 of the applicator 32, for rotating implant 30 via applicator 32. For example, the rotation tool may comprise a conventional manual wrench (e.g., a simple hand wrench, or a ratchet wrench), or a conventional drill or motor to which an appropriate drill head is attached, and which is operated at a low speed and at low torque, such as a physiodispenser. Alternatively, rotation tool 90 may comprise a conventional hexagonal tool with a knurled knob, such as a knurled hex screwdriver, and along its axis, a thin rod having a hexagonal head which fits into a female hexagonal socket defined by coupling element 43 of applicator 32.

As shown in Fig. 1B, during at least a portion of the implantation procedure, delivery tube 50 is in fluid communication with a supply tube 52, which in turn is in fluid communication with a source of fluid 54. Fluid source 54 may comprise a manual syringe 56 or powered drug delivery device, as is known in the art.

Reference is made to Figs. 2A-C, which are schematic illustrations of alternative configurations of dental implant 30, in accordance with respective applications of the present invention. In the configuration shown in Fig. 2A, distal opening 41 of lumen 40 is located on distal implant end 38 at a location other than a distal tip 70 of the implant. For some applications, the location is within 3 mm of distal tip of 70, as measured along the surface of the distal tip. As mentioned above with reference to Figs. 1A-C, for some applications, lumen 40 is open to the distal end via a plurality of distal openings 41, as shown in Fig. 2A. One or more of the openings may be at a location other than distal tip 70, including at one or more locations at distal implant end 38 and/or elsewhere on distal implant portion 48. Alternatively, lumen 40 is open to distal implant end 38 or distal implant portion 48 via exactly one opening (configuration not shown in Fig. 2A).

In the configuration shown in Fig. 2B, distal implant end 38 is concave, such that the raised edge of the concavity defines a sharp cutting surface 46. In the configuration shown in Fig. 2C, distal implant end 38 is generally flat, and the distal end is shaped so as to define sharp cutting surface 46, typically near the edge of the distal end.

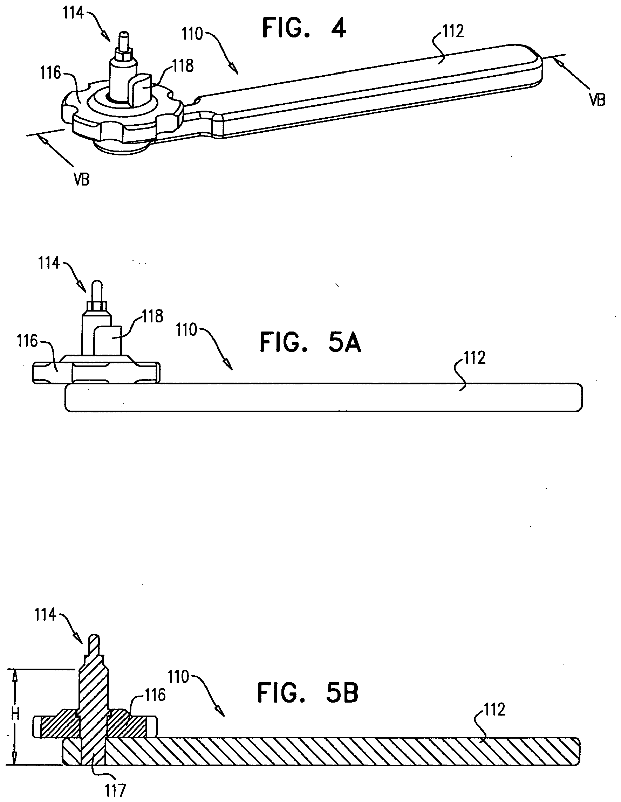

Reference is now made to Figs. 3A-D, which are schematic illustrations of alternative configurations of dental implant 30 and applicator 32 in which the distal end of delivery tube 50 is initially welded to implant 30, in accordance with respective applications of the present invention. Figs. 3A and 3C show dental implant 30 and applicator 32 not attached to each other, while Figs. 3B and 3D show the applicator attached to the dental implant. In this configuration, a separate tool is used to break the delivery tube from the implant, such as one of the tools described hereinbelow with reference to Figs. 4-6B, 7-8B, 9A-11D, or 12-14. Applicator 32 is typically removably coupled to the proximal end of implant 30, such as using coupling techniques described hereinabove with reference to Figs. 1A-C.

In this configuration, delivery tube 50 and applicator 32 are configured such that the applicator 32 prevents decoupling of delivery tube 50 from implant 30, such as by preventing application of a breaking torque to the delivery tube, typically by preventing rotation of the distal tube end with respect to the lateral opening of the implant. For some applications, delivery tube 50 comprises a fixing element 100, and applicator 32 is shaped so as to define a corresponding fixing element receptor 102. When applicator 32 is coupled to implant 30, a proximal portion 104 of fixing element 100 is coupled to fixing element receptor 102, thereby preventing non-longitudinal movement of the fixing element, and thus rotation of the delivery tube. For example, the fixing element may be oriented generally parallel to distal portion 76 of delivery tube 50 and to longitudinal axis 96 of implant 30. Removal of applicator 32 from implant 30 frees the fixing element, thereby allowing rotation of delivery tube 50 and breaking thereof from the implant.

For some applications, as shown in Figs. 3A-B, fixing element 100 is shaped so as to define a fixing pin, and fixing element receptor 102 is shaped so as to define a receptor hole. The fixing pin is positioned within the fixing hole. For other applications, as shown in Figs. 3C-D, proximal portion 104 of fixing element 100 is shaped so as to define a slot or groove, and fixing element receptor 102 is shaped so as to define a corresponding coupling surface that fixes the fixing element to the fixing element receptor when the applicator is coupled to the implant. Other pairs of corresponding coupling elements will be evident to those skilled in the art who have read the present application, and are within the scope of the invention.

Alternatively, for some applications, delivery tube 50 and applicator 32 are not configured to prevent decoupling of the delivery tube from the implant, e.g., the delivery tube does not comprise the fixing pin, and the applicator is not shaped so as to define the fixing hole.

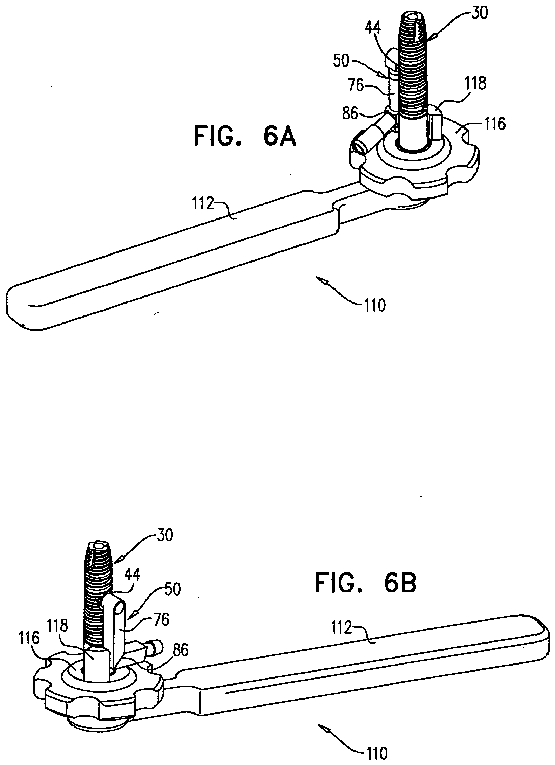

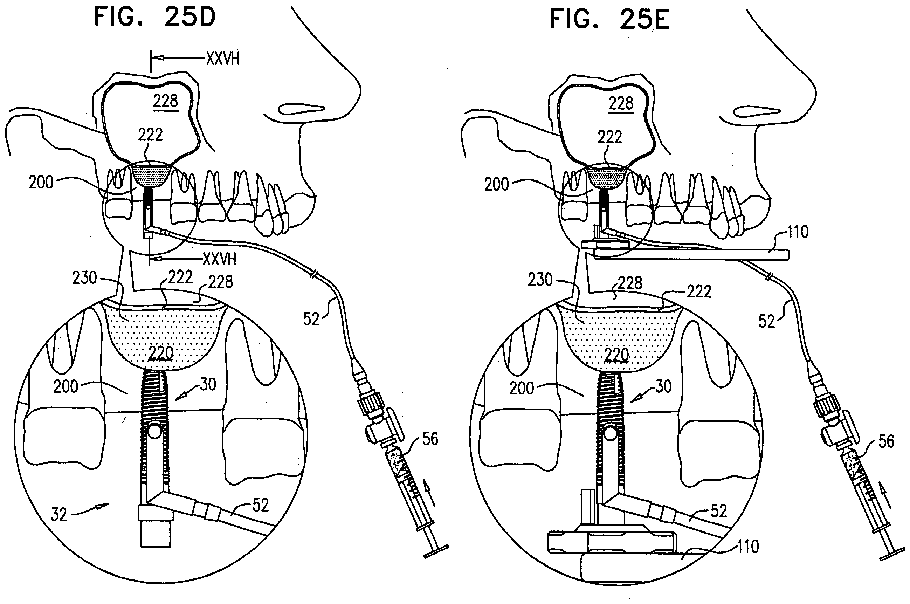

Reference is now made to Figs. 4-6B, which are schematic illustrations of a rotation breaking tool 110, in accordance with an application of the present invention. Fig. 4 is an isometric view of tool 110, Fig. 5A is a side-view of the tool, and Fig. 5B is a cross-sectional side-view of the tool along line IXB-IXB of Fig. 4. Figs. 6A-B show tool 110 coupled to implant 30. Tool 110 is used to break delivery tube 50 from implant 30, for applications in which applicator 32 is not configured to perform such breaking. For example, tool 110 may be used with the configuration of implant 30 and applicator 32 described hereinabove with reference to Figs. 1A-C and 3A-D. Typically, tool 110 is temporarily coupled to the proximal end of implant 30 during a surgical procedure, after applicator 32 has been decoupled from the implant, for example as described hereinbelow with reference to Fig. 25E. (Typically, the tool is coupled to the same coupling surface of the implant to which the applicator is coupled.) Alternatively, tool 110 is coupled to implant 30 indirectly via applicator 32, by coupling the tool to the proximal end of the applicator (configuration not shown).

Tool 110 comprises a handle 112 and a coupling element 114 positioned near a distal end of the handle. For some applications, as shown in Figs. 4-6B, a longitudinal axis of handle 112 forms an angle of between 70 and 90 degrees with a longitudinal axis of coupling element 114, e.g., is perpendicular to coupling element 114, as shown. Coupling element 114 is configured to temporarily engage a corresponding coupling element of implant 30. For example, coupling element 114 may comprise a male coupling element that is inserted into a corresponding female coupling element of the implant. Friction between coupling element 114 and the socket of the implant removably couples the tool to the implant. The male coupling element may, for example, be shaped so as do define a short cylinder extending from a hexagonal head. Tool 110 further comprises a rotating member 116, which is positioned around coupling element 114, such that a base 117 of the coupling element passes through the rotating member, as best seen in Fig. 5B. The rotating member is thus free to rotate with respect to the handle of the tool, while the coupling element remains stationary with respect to the handle. Rotating member 116 is shaped so as to define a human interface surface, in order to facilitate convenient direct rotation by the surgeon. In the configurations described with reference to Figs. 4-6B, 7-8B, 9A-11D, and 12-14, handle 112 typically has a length along a longitudinal axis thereof of at least 2 cm, no more than 12 cm, and/or between 2 and 12 cm, e.g., between 4 and 9 cm.

Rotating member 116 comprises a breaking element 118, which extends in the same direction as coupling element 114 (e.g., perpendicular to the handle), partially alongside the coupling element. The breaking element may, for example, be shaped as a tab. As shown in Figs. 6A-B, the breaking element is configured to apply a breaking torque to distal portion 76 of delivery tube 50, upon rotation of rotating member 116. The breaking element typically makes contact with the delivery tube near bend 86 of the delivery tube. In the exemplary configuration shown in Figs. 6A-B, rotating member 116 is rotated counterclockwise as viewed from above (typically by between 180 and 360 degrees), in order to push breaking element 118 against delivery tube 50. The torque rotates the distal end of the delivery tube with respect to lateral opening 44 of implant 30, thereby breaking the delivery tube from the implant. After breaking the delivery tube from the implant, tool 110 is decoupled from the implant.

The portion of tool 110 not within implant 30 when the tool is coupled to the implant typically has a height H of between 0.5 and 3 cm, such as less than 2 cm, as shown in Fig. 5B. Such a small height requires minimal height in the mouth during use of the tool, thereby enabling minimal mouth opening by the patient in order to insert the tool into the mouth.

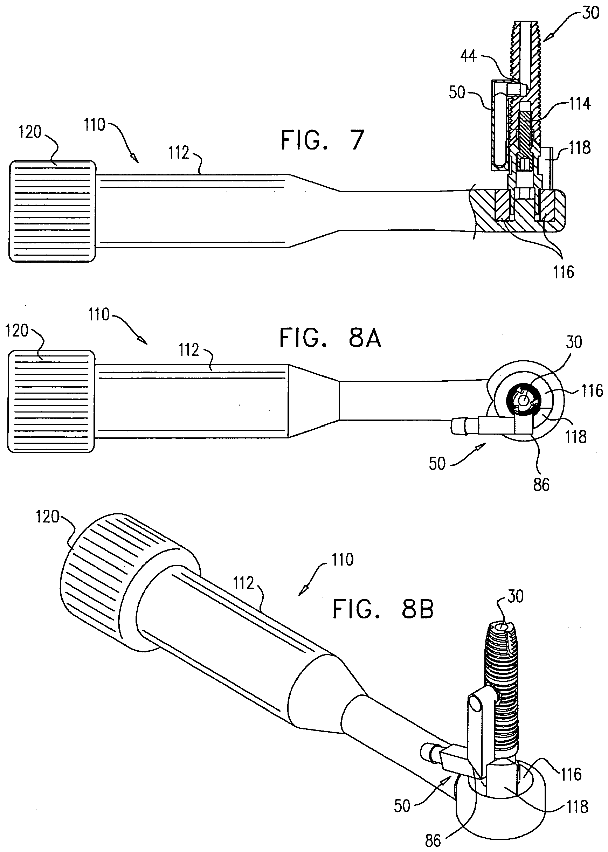

Reference is made to Figs. 7-8B, which are schematic illustrations of another configuration of rotation breaking tool 110, in accordance with an application of the present invention. Fig. 7 is a cross-sectional side-view of tool 110 coupled to implant 30, and Figs. 8A and 8B show the tool coupled to implant 30, viewed from the top (the direction in which coupling element 114 protrudes), and the side, respectively.

In this configuration of tool 110, as in the configuration shown in Figs. 4-6B, coupling element 114 typically extends at an angle of between 70 and 90 degrees, e.g., at a right angle. However, unlike in the configuration shown in Fig. 8-6B, in this configuration the rotating member 116 is indirectly, remotely rotated by the surgeon by turning a knob 120 that is typically positioned at or near a proximal end of the handle. Tool 110 comprises one or more rods, gears, and/or cams (not shown), typically positioned within the handle, which together translate the rotation of knob 120 to rotation of rotating member 116. As in the configuration shown in Figs. 4-6B, the coupling element remains stationary with respect to the handle while the rotating member rotates, typically by between 180 and 360 degrees.

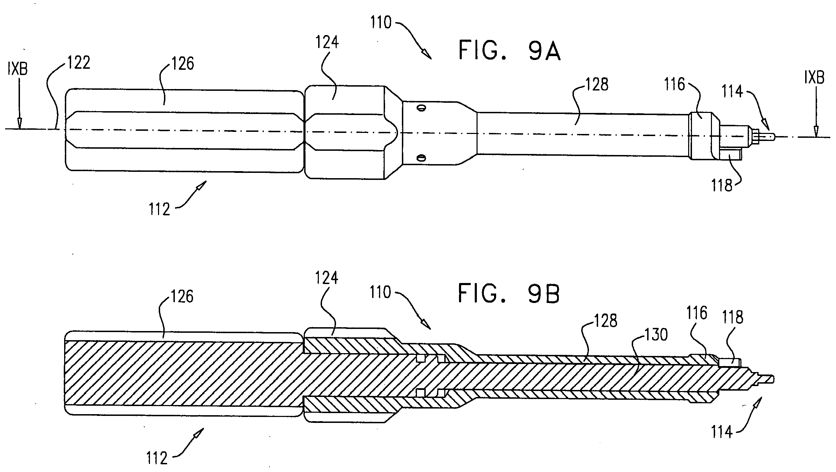

Reference is made to Figs. 9A-B, which are schematic isometric and cross-sectional illustrations, respectively, of yet another configuration of rotation breaking tool 110, in accordance with an application of the present invention. In this configuration of tool 110, unlike in the configurations shown in Figs. 4-6B and 7-12, coupling element 114 is oriented at an angle of between 0 and 30 degrees with respect to a longitudinal axis 122 of handle 112, such as parallel to the longitudinal axis, typically concentric with the axis. Rotating member 116 and breaking element 118 rotate around axis 122.

Tool 110 is configured to enable rotation of breaking element 118 while coupling element 114 is held stationary. To enable such rotation, for some applications handle 112 comprises a rotating sub-handle 124 and a stationary sub-handle 126. Rotating sub-handle 124 is in mechanical communication with rotating member 116 via a rotating shaft 128, and stationary sub-handle 126 is in mechanical communication with coupling element 114 via a stationary shaft 130. For some applications, as shown in Fig. 9A-B, stationary shaft 130 passes through rotating shaft 128. Rotating and stationary sub-handles 124 and 126 typically are shaped so as to define respective knobs, to facilitate easy grasping by the surgeon. In the configuration shown in Fig. 9A-B, stationary sub-handle 126 is proximal to rotating sub-handle 124, i.e., the stationary sub-handle is further from coupling element 114 than is the rotating sub-handle.

To use tool 110 to break delivery tube 50 from implant 30, the surgeon temporarily couples coupling element 114 to the proximal end of the implant. The surgeon holds stationary sub-handle 126 rotationally stationary, while at the same time rotating rotating sub-handle 124 (typically by between 180 and 360 degrees). This relative rotation pushes breaking element 118 against delivery tube 50, thereby breaking the delivery tube from the implant.

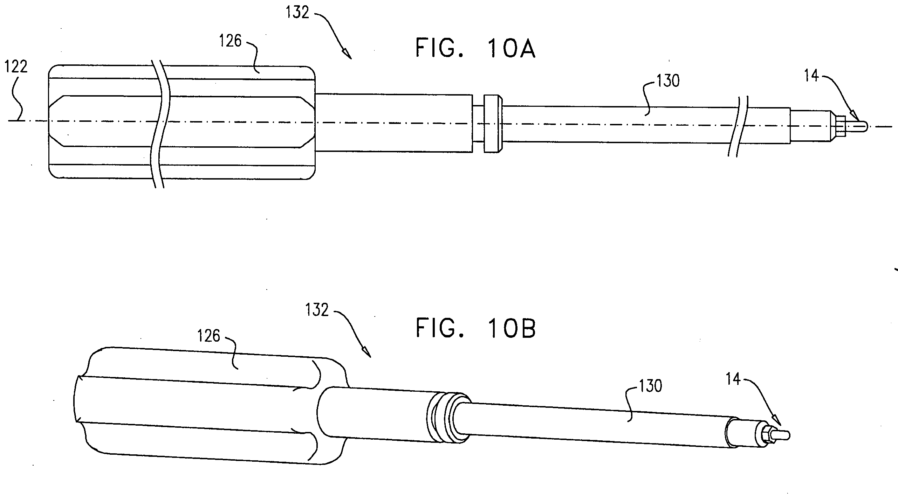

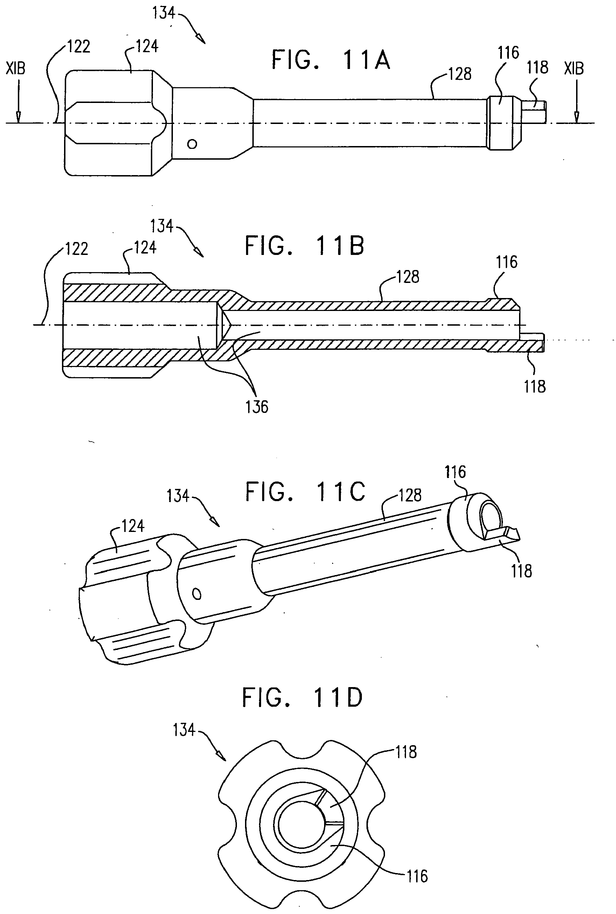

Reference is made to Figs. 10A-B and 11A-D, which are schematic illustrations of components of tool 110 in the configuration shown in Figs. 9A-B, in accordance with an application of the present invention. Figs. 10A-B show a first component 132 of tool 110, which component comprises stationary sub-handle 126, stationary shaft 130, and coupling element 114. Figs. 11A-D show a second component 134 of tool 110, which component comprises rotating sub-handle 124, rotating shaft 128, rotating member 116, and breaking element 118. Rotating sub-handle 124 and rotating shaft 128 together define a lumen 136 that passes through the rotating sub-handle and rotating shaft, as shown in Fig. 11B. Fig. 11D shows a distal view of the distal end of second component 134.

Tool 110 is assembled by passing stationary shaft 130 of first component 132 through lumen 136 of second component 134. First component 132 can freely rotate with respect to the second component 132. Typically, the components are configured to prevent the first component from separating from the second component.

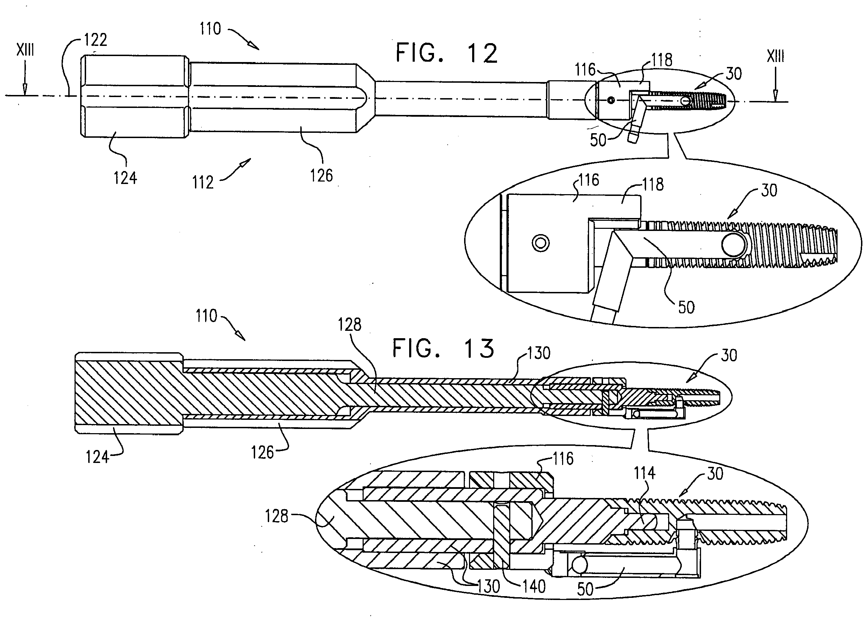

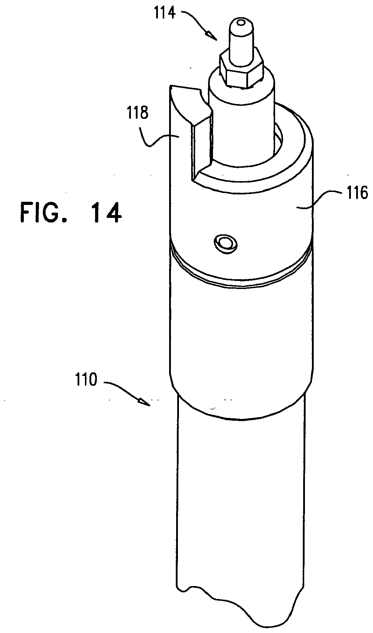

Reference is made to Figs. 12-14, which are schematic illustrations of still another configuration of rotation breaking tool 110, in accordance with an application of the present invention. Fig. 12 and 13 are isometric and cross-sectional views, respectively, of tool 110 temporarily coupled to implant 30, and Fig. 14 is an isometric enlargement of a distal end of the tool not coupled to the implant. In this configuration of tool 110, as in the configurations shown in Figs. 9A-11D, coupling element 114 is oriented at an angle of between 0 and 30 degrees with respect to longitudinal axis 122 of handle 112, such as parallel to the longitudinal axis, typically concentric with the axis. Rotating member 116 and breaking element 118 rotate around axis 122.

Tool 110 is configured to enable rotation of breaking element 118 while coupling element 114 is held stationary. To enable such rotation, for some applications tool 110 comprises rotating sub-handle 124 and stationary sub-handle 126. Rotating sub-handle 124 is in mechanical communication with rotating member 116 via rotating shaft 128, and stationary sub-handle 126 is in mechanical communication with coupling element 114 via stationary shaft 130. For some applications, as shown in Fig. 12 and 13, rotating shaft 128 passes through stationary shaft 130 (unlike the configuration shown in Figs. 9A-11D, in which stationary shaft 130 passes through rotating shaft 128). Rotating shaft 128 is in mechanical communication with rotating member 116 via a connecting element 140 that passes through stationary shaft 130, as shown in Fig. 13. Rotating and stationary sub-handles 124 and 126 typically are shaped so as to define respective knobs, to facilitate easy grasping by the surgeon. In the configuration shown in Fig. 12-14, unlike in the configuration shown in Figs. 9A-11D, rotating sub-handle 124 is proximal to stationary sub-handle 126, i.e., the rotating sub-handle is further from coupling element 114 than is the stationary sub-handle.

To use tool 110 to break delivery tube 50 from implant 30, the surgeon temporarily couples coupling element 114 to the proximal end of the implant. The surgeon holds stationary sub-handle 126 rotationally stationary, while at the same time rotating rotating sub-handle 124 (typically by between 180 and 360 degrees). This relative rotation pushes breaking element 118 against delivery tube 50, thereby breaking the delivery tube from the implant.

Rotation breaking tool 110, as described hereinabove with reference to Figs. 4-6B, 7-8B, 9A-11D, and 12-14, is configured to stabilize implant 30 during the breaking of delivery tube 50 from the implant. During breaking, the surgeon holds handle 112 stable, which in turn holds coupling element 114 of tool 110 stable, and thereby stabilizes the implant to which the coupling element is coupled. Rotating member 116, when rotated, applies stress only between breaking element 118 and delivery tube 50.

In some applications of the present invention in which delivery tube 50 is initially coupled to implant 30 (such as by welding), the human hand of the surgeon grasps the delivery tube and applies the breaking torque to the delivery tube to decouple the distal tube end from the implant. Alternatively or additionally, the breaking torque is applied using a tool that is brought into contact with the delivery tube. Optionally, the tool may be configured to grasp the delivery tube; for example, the tool may comprise a needle holder, forceps, or tweezers.

Reference is made to Figs. 15, 16, 17A-E, and 18, which are schematic illustrations of dental implant 30 and applicator 32 comprising a retaining element 170, in accordance with an application of the present invention. Fig. 15 and Fig. 16 (a cross-section view of Fig. 15) show retaining element 170 in a first position in which the retaining element prevents the distal end of delivery tube 50 from separating from implant 30. Retaining element 170 thus holds the distal end of delivery tube 50 sealingly coupled to implant 30 such that the delivery tube is in fluid communication with lumen 40 of implant 30 via lateral opening 44 of implant 30. In this application, delivery tube 50 is not welded to implant 30. Retaining element nevertheless 170 provides a strong seal that is able to withstand the pressure of the fluid provided by fluid source 54 and the injection of a regenerative material, if performed.

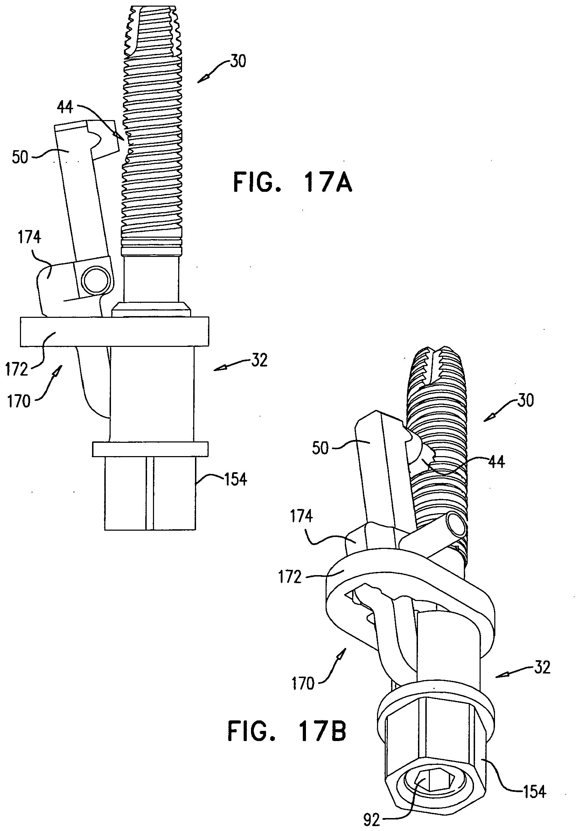

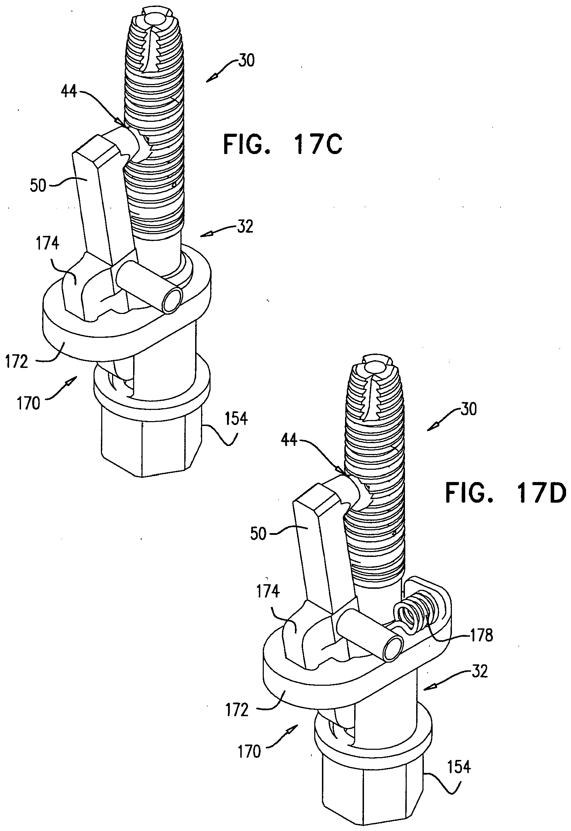

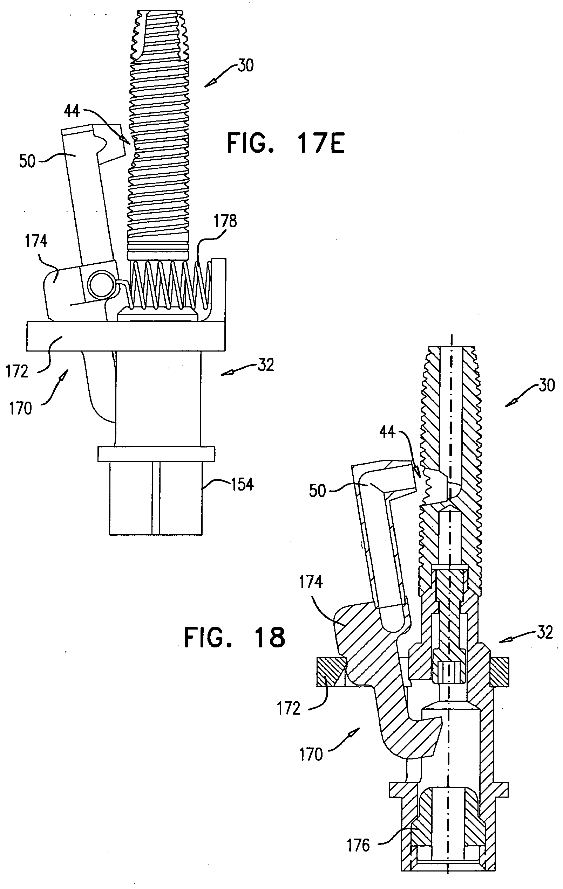

Figs. 17A-E are views from respective directions in which retaining element 170 assumes a second position in which the retaining element does not prevent the distal tube end from separating from the implant, such that delivery tube 50 becomes decoupled from the implant. Fig. 18 is a cross-sectional view of Fig. 17A.

In this configuration, retaining element 170 is typically an integral part of applicator 32, e.g., applicator 32 is fixed to retaining element 170, and delivery tube 50 is coupled to retaining element 170. Implant 30 is typically packaged and provided to the surgeon pre-coupled to applicator 32, with the retaining element in the first position in which it prevents the distal end of the delivery tube from separating from the implant. The implant, applicator, and retaining element are configured such that the coupling of the applicator to the implant provides proper rotational orientation to precisely align the distal end of delivery tube 50 with lateral opening 44. After the dental implant has been screwed into the ridge, and fluid and/or regenerative material has been injected through the delivery tube 50 and implant 30, the surgeon causes the retaining element to assume the second position, thereby decoupling the delivery tube from the implant.

Applicator 32 is typically removably coupled to the proximal end of implant 30, such as using coupling techniques described hereinabove with reference to Figs. 1A-C. A proximal end of applicator 32 is typically shaped so as to define a coupling element, such as a male coupling element (as shown in Figs. 15-18), e.g., a hexagonal head, or a female coupling element (configuration not shown), e.g., a hexagonal socket. Implant 30 may comprise a two-stage implant, or a single-stage transgingival implant, both of which are described hereinabove with reference to Figs. 1A-C.

For some applications, the distal end of delivery tube 50 is shaped so as to define a cone. For example, as shown in Fig. 16, the cone may have an opening angle θ (theta) of between 0 and 90 degrees, such as between about 0 and about 60 degrees. For some applications, the cone forms a Morse taper, in which case the distal end of delivery tube 50 must be removed with force when retaining element 170 assumes the second position.

For some applications, retaining element 170 comprises a retaining element body 172, a pivoting element 174, and a proximal blocking element 176. Delivery tube 50 is coupled to the pivoting element. The pivoting element is configured to pivot with respect to the retaining element body, such that the delivery tube also pivots with respect to the retaining element body, and thereby with respect to applicator 32.

Blocking element 176 can be advanced distally and withdrawn proximally within applicator 32, such as by rotating the blocking element. When in a distal position, the blocking element prevents pivoting element 174 from pivoting freely, thereby causing retaining element 170 to assume the first position in which the retaining element prevents the distal end of delivery tube 50 from separating from implant 30. When in a proximal position, the blocking element does not interfere with the pivoting of pivoting element 174, thereby allowing retaining element 170 to assume the second position in which the retaining element does not prevent the distal end of delivery tube 50 from separating from implant 30.

For some applications, as shown in Figs. 17D-E, applicator 32 further comprises a spring 178, which is configured to apply a force that separates the distal tube end from the implant when the retaining element assumes the second position.

For some applications, the distal end of delivery tube 50 comprises a sealing element, which is configured to removably sealingly couple delivery tube 50 to lateral opening 44 of implant 30. For example, the sealing element may comprise an o-ring or a gasket.

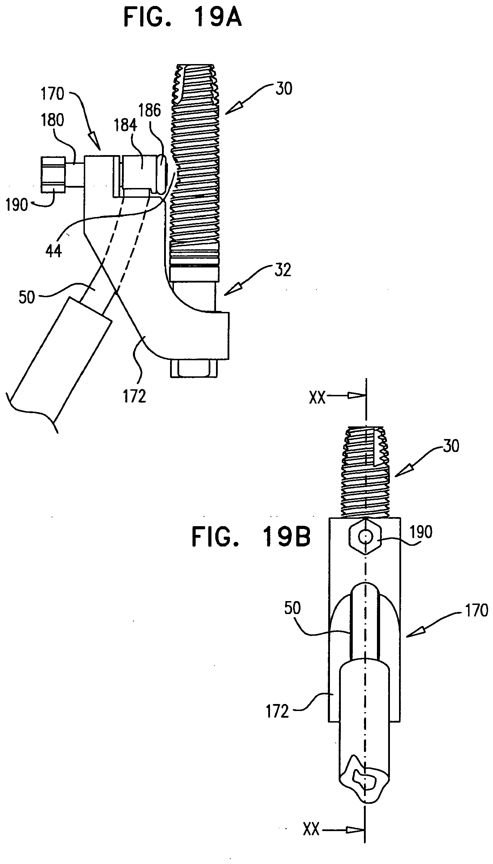

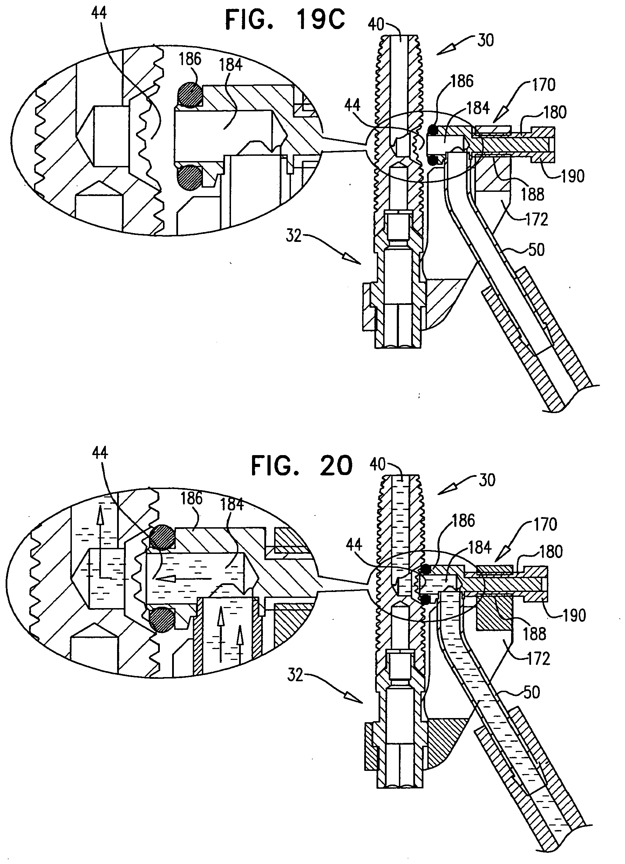

Reference is now made to Figs. 19A-C and 20, which are schematic illustrations of another configuration of dental implant 30, applicator 32, and retaining element 170, in accordance with an application of the present invention. Figs. 19A-B and 19C are isometric and cross-sectional views, respectively, showing retaining element 170 in a second position (similar to the second position described hereinabove with reference to Figs. 17A-E), in which the distal end of delivery tube 50 is not coupled to implant 30. Fig. 20 is a cross-sectional view showing retaining element 170 in a first position (similar to the first position described hereinabove with reference to Figs. 15 and 16), in which the retaining element holds the distal end of the delivery tube sealingly coupled to implant 30 such that the delivery tube is in fluid communication with lumen 40 of the implant 30 via lateral opening 44 of implant 30.

Applicator 32 is typically removably coupled to the proximal end of implant 30, such as using the coupling techniques described hereinabove with reference to Figs. 1A-C. A proximal end of applicator 32 is typically shaped so as to define a coupling element, such as a male coupling element (as shown in Figs. 19A-20), e.g., a hexagonal head, or a female coupling element (configuration not shown), e.g., a hexagonal socket. Implant 30 may comprises a two-stage implant, or a single-stage transgingival implant, both of which are described hereinabove with reference to Figs. 1A-C.

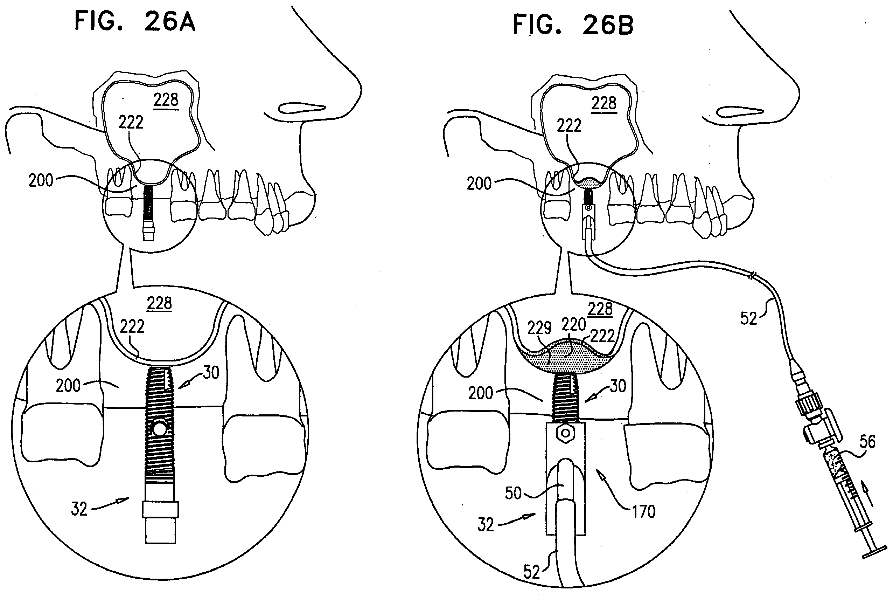

In this application, delivery tube 50 is not welded to implant 30. Retaining element nevertheless 170 provides a strong seal that is able to withstand the pressure of the fluid provided by fluid source 54 (as described hereinbelow with reference to Fig. 26B) and the subsequent injection of a regenerative material, if performed.

In this configuration, retaining element 170 and applicator 32 are typically provided as separate components of dental implant system 20, that are removably coupled to each other by the surgeon during a dental procedure. Delivery tube 50 is coupled to retaining element 170. Implant 30 is typically packaged and provided to the surgeon pre-coupled to applicator 32, while retaining element 170 is provided separately, not coupled to the applicator or implant. After the dental implant has been screwed into the ridge, such as described hereinbelow with reference to Fig. 26A, the surgeon attaches retaining element 170 to applicator 32, with the retaining element in the second position, such as described hereinbelow with reference to Fig. 26B. The surgeon then causes the retaining element to assume the first position, thereby coupling the delivery tube to the implant. The implant, applicator, and retaining element are configured such that the coupling of the applicator to the implant provides proper rotational and longitudinal orientation to precisely align the distal end of delivery tube 50 with lateral opening 44.

The surgeon injects fluid and/or regenerative material through delivery tube 50 and implant 30. The surgeon decouples the delivery tube from the implant, removes the retaining element from the applicator, and then removes the applicator from the implant.

For some applications, retaining element 170 comprises retaining element body 172, which is configured to be disposed alongside implant 30 from applicator 32 to lateral opening 44 of implant 30. Optionally, the proximal end of applicator 32 slightly protrudes proximally from retaining element body 172, as shown in Figs. 19A-C and 20. For some applications, retaining element 170 further comprises a shaft 180, a first end of which serves as the distal end of delivery tube 50, and is shaped so as to provide a coupling port 184 for delivery tube 50. The shaft is configured to sealingly couple the coupling port to lateral opening 44 of implant 30. To this end, the coupling port 184 (i.e., the distal end of delivery tube 50) typically comprises a sealing element 186. For example, the sealing element may comprise an o-ring or a gasket. The shaft is typically oriented such that a longitudinal axis thereof forms an angle of 90 degrees with the longitudinal axis of the implant, e.g., 90 degrees.

For some applications, shaft 180 is configured such that rotation thereof brings coupling port 184 (and the distal tube end) into contact with lateral opening 44 of implant 30. For example, an external surface of a portion of shaft 180 may be shaped so as to define a screw thread 188, which passes through a lumen of retaining element body 172 that is shaped so as to define a corresponding screw thread. The end of shaft 180 opposite the end that provides coupling port 184 is typically shaped so as to define a knob 190, for facilitating rotation of the shaft 180 by the surgeon.

For some applications, implant 30 comprises a removable plug that is configured to seal lateral opening 44. The plug is removed before retaining element 170 is applied to couple the distal end of delivery tube 50 to implant 30.

For some applications, the distal end of delivery tube 50 is shaped so as to define a cone, such as described hereinabove with reference to Fig. 16. For example, the cone may have an opening angle of between 0 and 90 degrees, such as between 0 and 60 degrees.

For some applications, retaining element 170 is configured to be coupled directly to dental implant 30, rather than to applicator 32. For these applications, retaining element 170 is typically removably coupled to the proximal end of implant 30, such as using the coupling techniques for coupling applicator 32 to implant 30, described hereinabove with reference to Figs. 1A-C, *mutatis mutandis.* A surface of retaining element 170 is typically shaped so as to define a coupling element, such as a male coupling element, e.g., a hexagonal head, or a female coupling element, e.g., a hexagonal socket. For example, retaining element 170 may comprise and be fixed to the component that is shown as applicator 32 in Fig. 19A-20.

For these applications, applicator 32 still may provided for use in one or more steps of an implantation procedure before the retaining element is coupled to the dental implant (but not for coupling the retaining element to the implant). For example, applicator 32 may be used for the step of the implantation procedure described hereinbelow with reference to Fig. 26A. The applicator is decoupled from the implant before coupling the retaining element to the dental implant, for performing the step of the procedure described hereinbelow with reference to Fig. 26B.

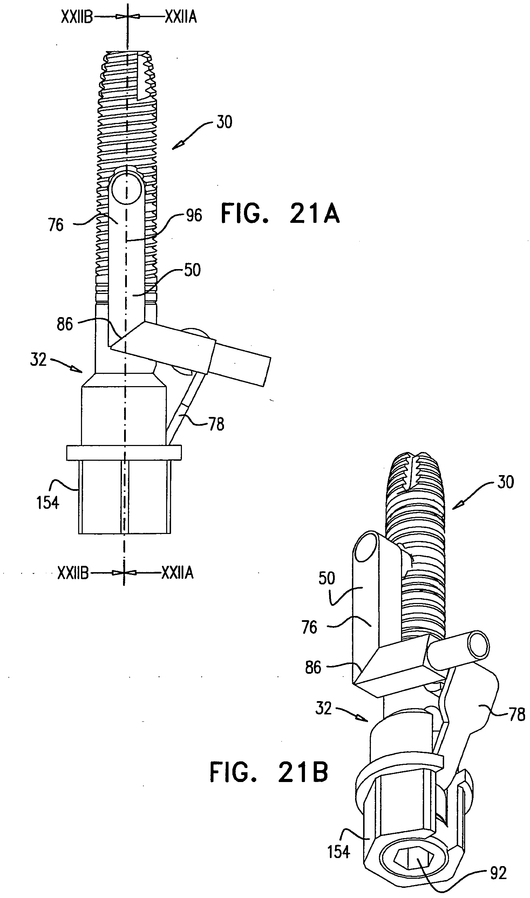

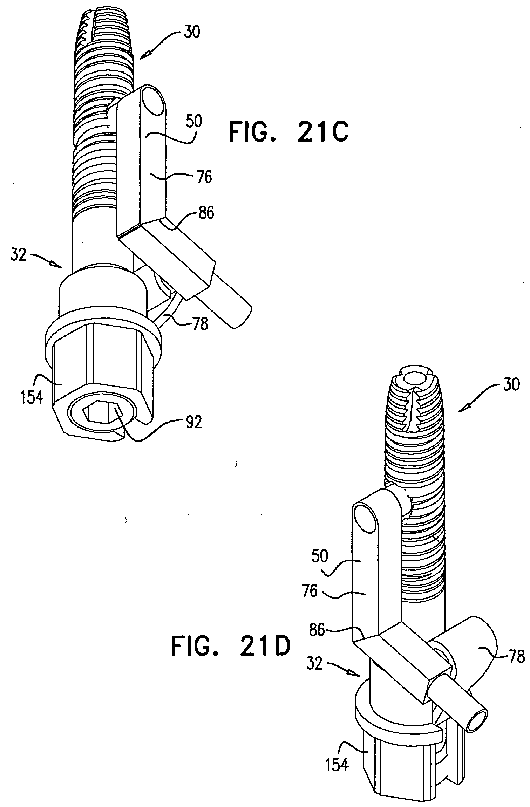

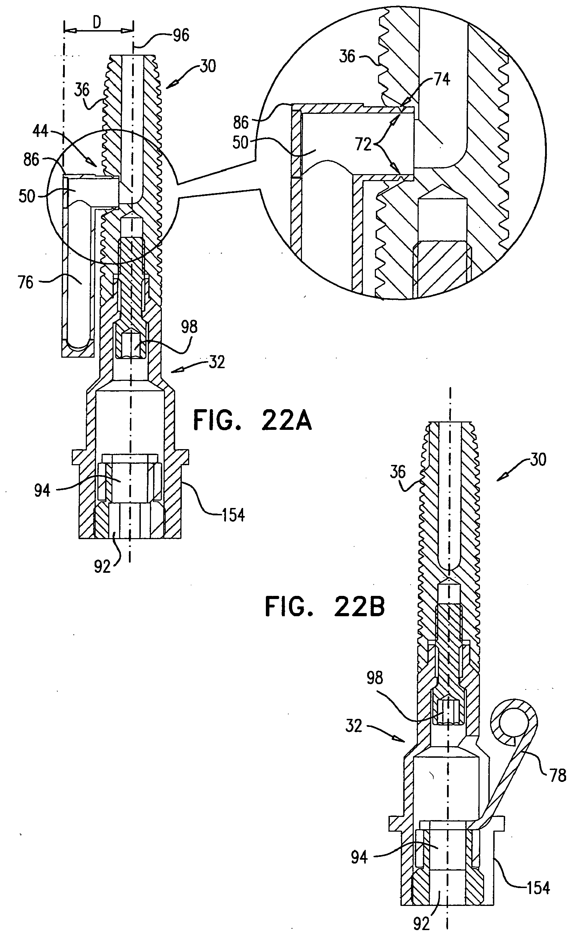

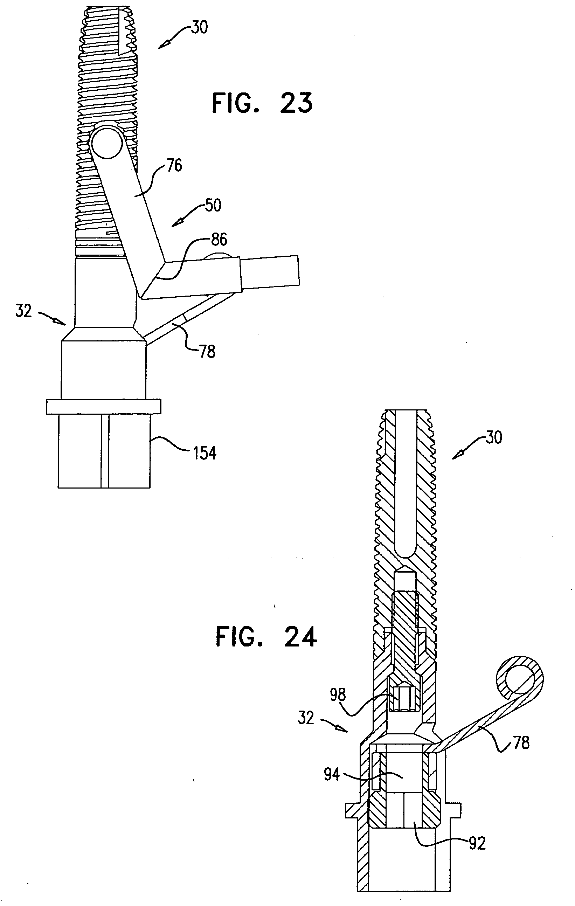

Reference is made to Figs. 21A-D, 22A-B, 23, and 24, which are schematic illustrations of dental implant 30 and applicator 32 in which the distal end of delivery tube 50 is initially welded to implant 30, in accordance with an application of the present invention. In this configuration of system 20, applicator 32 is configured to break delivery tube 50 from the implant. Figs. 21A-D are views from respective directions of the implant and applicator in which delivery tube 50 is coupled to the implant, such that the delivery tube is in fluid communication with lumen 40 of implant 30 via lateral opening 44 of implant 30. Figs. 22A-B are cross-sectional views taken along lines IVA-IVA and IVB-IVB of Fig. 21A, respectively. Fig. 23 shows the implant and applicator after the delivery tube has been broken, as described hereinbelow, and Fig. 24 is a cross-sectional view of Fig. 23.

Applicator 32 is typically removably coupled to the proximal end of implant 30, such as using coupling techniques described hereinabove with reference to Figs. 1A-C. A proximal end of applicator 32 is typically shaped so as to define a coupling element, such as a male coupling element (as shown in Figs. 3A-6), e.g., a hexagonal head, or a female coupling element (configuration not shown), e.g., a hexagonal socket. Implant 30 may comprises a two-stage implant, or a single-stage transgingival implant, both of which are described hereinabove with reference to Figs. 1A-C.

For some applications, applicator 32 is configured to break delivery tube 50 at thinner portion 72 by rotating the distal end of the delivery tube with respect to lateral opening 44 of the implant. Typically, applicator 32 is configured to apply a torque of greater than 50 Newton centimeters to the delivery tube, when rotating the distal tube end with respect to the lateral opening. The applicator typically applies the torque to the delivery tube without applying any meaningful torque to the implant itself, and thus does not dislodge or misalign the implant, which has been precisely placed in a bore in the ridge. For some applications, a distal portion 76 of delivery tube 50 is initially positioned generally parallel to central longitudinal axis 96 of implant 30 before thinner portion 72 is broken, as shown in Fig. 21A-D and 22A-B. Applicator 32 rotates the distal end of the delivery tube by rotating portion 76 between about 5 and about 20 degrees, e.g., about 10 degrees, until thinner portion 72 breaks, as shown in Figs. 5 and 6.

For some applications, applicator 32 comprises a lever arm 78, which is coupled to delivery tube 50 and arrange to rotate the distal tube end with respect to lateral opening 44. For some applications, the delivery tube is shaped so as to define bend 86 at between about 5 and about 20 mm from the distal tube end, and lever arm 78 is coupled to the delivery tube at a location proximal to the bend. For these applications, the bend typically has an angle of between 85 and 180 degrees. For some applications, applicator 32 comprises a rotatable surface 92 accessible from a proximal end of the applicator, which rotatable surface is rotatable with respect to a portion of the applicator. Rotation of rotatable surface 92 rotates the distal tube end by extending lever arm 78. For example, rotation of the rotatable surface may distally advance a transfer element 94 that extends the lever arm. For example, rotatable surface 92 may define an internal hex, e.g., having an internal width of about 2.4 mm (the hex width is the distance between parallel sides of the hexagon).

For some applications, applicator 32 comprises a connecting element, which removably couples the applicator to the proximal implant end. For some applications, the connecting element comprises a connecting screw 98. Typically, the head of screw 98 is accessible from a channel than passes through rotatable surface 92, such that the head can be rotated with a screwdriver tool inserted through the proximal end of the applicator, in order to decouple the applicator from the implant. For example, the connecting screw may define an internal hex that has an internal width less than that of rotatable surface 92, e.g., about 1.25 mm. For some applications, the applicator is configured such that rotation of rotatable surface 92 both (a) applies the breaking torque to the delivery tube that breaks the delivery tube at the thinner portion, and (b) rotates screw 98 to decouple the applicator from the proximal implant end.

For other applications, the connecting element does not comprise a screw, and instead comprises one or more surfaces, such as conical surfaces, that are configured to removably couple the applicator to the proximal implant end by friction. For example, the applicator may comprises a male coupling element, that is configured to be coupled to a female coupling element of the implant.

Reference is made to Figs. 25A-G, which are schematic illustrations of several steps of a minimally-invasive closed sinus lift surgical procedure for implanting dental implant 30, in accordance with an application of the present invention. The procedure is typically employed when a patient's maxillary alveolar ridge lacks sufficient bone mass to support a conventional dental implant. The procedure is particularly appropriate for implanting the configuration of implant 30 described hereinabove with reference to Figs. 1A-C, optionally in combination with one or more of the features described hereinabove with reference to Figs. 2A-C, 3A-B, 3C-D, and/or 28A-B.

A surgeon begins the procedure by preparing the oral facial region, and administering a local anesthetic. Optionally, as shown in Fig. 25A, the surgeon initiates an osteotomy in a maxillary alveolar ridge 200 by making a preliminary portion of a bore using a dental drill, such as a conventional sinus bur 202. This preliminary bore portion typically has a diameter of between about 1 and about 7 mm, e.g., between about 2 and about 6 mm, and leaves residual bone thickness of between about 0.5 and about 5 mm, e.g., between about 1 and about 4 mm, or between about 0.5 and about 2 mm, e.g., between about 1 and about 2 mm. Optionally, the surgeon widens the bore using a series of successively wider drill bits, until a desired bore diameters is achieved (for example, the largest drill bit may have a diameter of 3.65 mm for an implant having a diameter of 4.2 mm, or a diameter of 4.2 mm for an implant having a diameter of 5 mm). The bore may be measured using techniques known in the art, such as CT, x-ray, or x-ray with a depth guide. For some applications, a surgical guide is used to ensure clearance between the center of the osteotomy and the nearest tooth surfaces. Optionally, a pre-surgery radiograph (e.g., CT or x-ray) is performed, in order to enable the surgeon to estimate the height of the residual bone and plan the osteotomy accordingly.

For some applications, the surgeon uses a surgery guidance system for ensuring that the osteotomy is drilled to the requisite depth. For example, the surgeon may use Nobel Guide^{™} (Nobel Biocare, Zurich, Switzerland) or Simplant® dental software (Materialise Dental NV, Leuven, Belgium). These techniques use a combination of computerized models with physical surgical guiding devices to allow the dentist to drill an osteotomy at the requisite location, angulation, and depth.

After drilling the preliminary bore portion, the surgeon advances dental implant 30 into the bore by screwing the implant into ridge 200 using surgical rotation tool 90 (described hereinabove with reference to Figs. 1A and 1C), as shown in Fig. 25B. The surgeon typically screws the implant until distal implant end 38 reaches the end of the osteotomy. The surgeon then advances the implant slightly (typically, by about one additional rotation), causing the implant to break through the top of ridge 200 to below a Schneiderian membrane 222, thereby bringing distal opening(s) 41 into fluid communication with a surface of the membrane facing ridge 200, as shown in Fig. 25B. Distal implant end 38 typically does not pass through the top of ridge 200, at least at this stage in the procedure.

Optionally, after the initial insertion of the implant into the bore, the surgeon uses a periapical radiograph to estimate remaining distance from implant tip to the sinus floor. The surgeon rotates the implant to penetrate into the sinus, such as by rotating the implant by a number of rotations equal to the remaining distance divided by a constant, e.g., 1.2 mm. Optionally, the surgeon performs an additional periapical radiograph to ensure that the implant has penetrated into the sinus cavity.

After the implant has been advanced to membrane 222, the surgeon decouples rotation tool 90 from applicator 32, and couples supply tube 52 to the proximal end of delivery tube 50, as shown in Fig. 25C. The surgeon gently lifts and separates membrane 222 from the top of ridge 200 into a maxillary sinus 228, by injecting a fluid 229, such as a biocompatible solution such as normal saline solution or a gas, from fluid source 54 (optionally, under controlled pressure) via supply tube 52, delivery tube 50, and lumen 40, so as to form a cavity 220 under the membrane between the ridge and the membrane (in Fig. 25C, the membrane is shown partially raised). Typically, the surgeon injects sufficient fluid 229 into cavity 220 to inflate the cavity to a vertical height of between about 2 and about 20 mm from the top of ridge 200, such as between about 2 and about 11 mm, e.g., between about 2 and about 8 mm. For some applications, a measured volume of fluid 229 is injected in order to achieve the desired cavity height, such as between about 0.5 and about 6 ml of fluid, e.g., between about 1 and about 4 ml, between about 1 and about 3 ml, or between about 2 and about 4 ml.

For some applications, the fluid is drained from the cavity. For some applications, the surgeon detects that membrane 222 has detached from the top of ridge 200 by observing blood within the drained fluid 229. The membrane bleeds as it detaches because of the hydraulic pressure of fluid 229. Blood flows into the fluid and may be observed in supply tube 52 and/or fluid source 54, e.g., syringe 56. The presence of this blood serves as positive indication that the distal end of the implant has reached the sinus and the membrane has separate from the ridge. If blood is not seen, the surgeon may inject additional fluid and/or advance the implant further into the ridge. Optionally, the surgeon may instruct the patient to sit up as well, to enhance the return of fluid from the cavity.

For some applications, after draining the fluid from the cavity, the surgeon injects a regenerative material 230, such as liquid or gel bone graft, into cavity 220, as shown in Fig. 25D. Fluid source 54 or a separate syringe or powered drug delivery device is used for injecting the regenerative material. If a separate syringe or device is used to inject the material, the material may be provided via supply tube 52, or via a separate supply tube coupled to the proximal end of delivery tube 50. Regenerative material 230 may comprise an allograph, an autogeneous bone graft, or a xenograft, and may, for example, comprise a natural material, a synthetic material, or a mixture thereof. For example, regenerative material 230 may comprise one of the following commercially available fluid bone graft materials: DBX Paste (MTF), Allomatrix (Wright), Cerament (Bone Support), DynaGraft (Citagenix/ISOTIS), Fisiograft (Ghimas), Grafton (Osteotech), Optium DBM Gel (Lifenet/Depuy J&J), OsteoMax (Orthfix), PD VitalOs Cemen (VitalOs), or Regenafil® (Exactech). Alternatively, regenerative material 230 may comprise the composition described hereinbelow that comprises saline solution mixed with solid bone graft particles. Optionally, the system monitors and generates an output indicative of the pressure of the regenerative material as it is injected.

For some applications, system 20 measures the volume of fluid 229 injected into the cavity between the ridge and the membrane while forming cavity 220, at the step of the procedure described hereinabove with reference to Fig. 25C. Responsively to the measured volume, the surgeon determines an amount of regenerative material 230 to inject into cavity 220 at the step of the procedure described hereinabove with reference to Fig. 25D. Typically, the amount of regenerative material 230 is approximately equal to the volume of injected fluid 229, or slightly greater or less than the volume of the injected fluid. As a result, waste of regenerative material 230 is generally minimized, and the likelihood of perforating the membrane by injection of the regenerative material is generally reduced.

For some applications, the surgeon uses a flexible wire as a piston to help push the regenerative material through the supply tube and/or lumen. This technique may be helpful when the regenerative material is viscous and thus difficult to inject using an ordinary syringe.

Alternatively, for some applications, regenerative material 230 is not injected into the cavity, i.e., the step of the procedure described hereinabove with reference to Fig. 25D is omitted. Fluid 229, which may comprise saline solution, is left in cavity 220, or, alternatively, is drained from the cavity. Recent research has shown that elevation of the Schneiderian membrane and subsequent support thereof in a tented position promotes new bone formation even without the introduction of bone regenerative material (for example, see the above-mentioned article by Pjetursson et al.). If fluid 229 is left in place in the cavity, the fluid holds the membrane in the raised position. If the fluid is drained, implant 30, when advanced as described hereinbelow with reference to Fig. 25F, holds the membrane in the raised position.

Further alternatively, at the step described hereinabove with reference to Fig. 25D, instead of injecting regenerative material 230, the surgeon injects an alternative therapeutic material, such as one or a mixture of more than one of the following materials: a bone growth stimulating substance, such as a bone morphogenetic protein (BMP), and blood.

Still further alternatively, the surgeon injects regenerative material 230, rather than fluid 229, to lift membrane 222, thereby combining the steps of the procedure described hereinabove with reference to Figs. 25C and 25D. In this case, the regenerative material typically comprises a liquid.

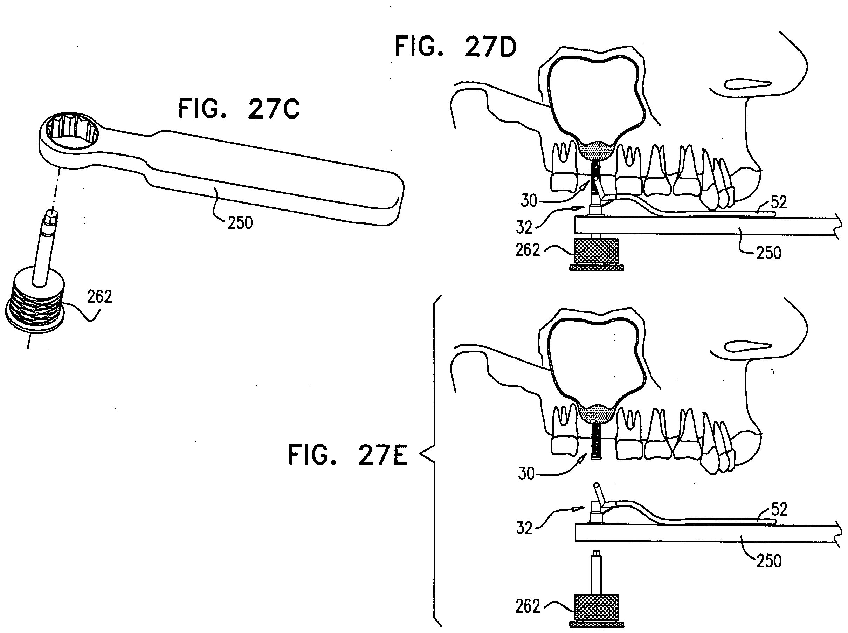

As shown in Fig. 25E, the surgeon breaks delivery tube 50 from implant 30, for example using one of the tools described hereinabove with reference to Figs. 4-6B, 7-8B, 9A-11D, or 12-14. Before coupling the tool to the implant, the surgeon decouples applicator 32 from the implant, for example using a driver tool, e.g., similar to driver 262 described hereinbelow with reference to Fig. 27C. (For applications in which implant 30 implements the techniques described hereinabove with reference to Figs. 3A-B or 3C-D, such decoupling additionally allows rotation of delivery tube 50 and breaking thereof from the implant.) Optionally, the surgeon is provided with more than one of these tools, and selects the tool that is most convenient to use based on the location of the implant in the patient's oral cavity, and the particular characteristics of the patient and the surgical procedure. The surgeon may break delivery tube 50 from implant 30 before or after decoupling supply tube 52 from the proximal end of delivery tube 50, as decided by the surgeon based on surgical conditions. After breaking the delivery tube from the implant, the surgeon decouples the tool from the implant.

After decoupling delivery tube 50 from implant 30, the surgeon further advances (e.g., by rotating or screwing) implant 30 into regenerative material 230 in cavity 220, as shown in Fig. 25F. For example, the surgeon may use the same surgical rotation tool 90 described hereinabove with reference to Fig. 25B, by coupling the rotation tool to the proximal coupling element defined by implant 30. This additional advancing of the implant advances lateral surface 42 of implant 30 at least until lateral opening 44 is positioned entirely within the bore in ridge 200 and/or in regenerative material 230 in cavity 220. Such positioning of both ends of lumen 40 within bone substantially reduces the risk of infection, because proximal end 34 of implant 30 that is exposed to the oral cavity or gingiva is permanently closed. Typically, the surgeon couples a cover screw to the proximal end of the implant using a hand driver, and sutures the gingiva.

For some applications, after decoupling delivery tube 50 from implant 30 and before further advancing the implant, the surgeon plugs lateral opening 44 of implant 30, using a plug (configuration not shown). The plug may be configured to be (a) screwed in, (b) pushed in by friction or a Morse taper, and/or (c) glued in using a cement or adhesive. Alternatively or additionally, the plug may comprise a cement or adhesive material that solidifies in opening 44. Optionally, the outer surface of the plug is treated using known techniques for implant surface treatment to enhance osseointegration.

As shown in Fig. 25G, after bone grows in cavity 220 (into regenerative material 230, if injected) and is integrated into ridge 200, an appliance 140, such as a crown, is coupled to implant 30, typically using an abutment 242 coupled to implant 30, as is known in the art. Alternatively, as mentioned above, implant 30 comprises a single-stage transgingival implant/abutment, as is known in the art.

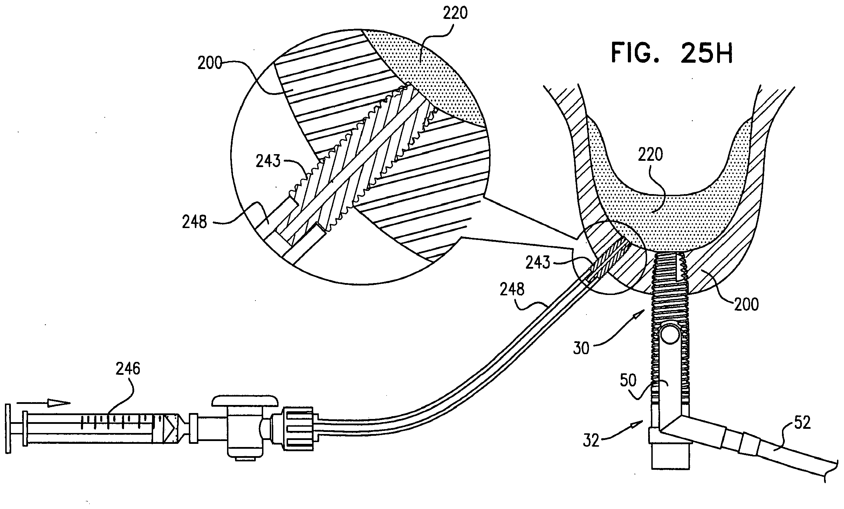

Reference is made to Figs. 25H-J, which are schematic cross-sectional illustrations of alternative techniques for injecting regenerative material 230, taken along line XXVH-XXVH of Fig. 25D, in accordance with respective applications of the present invention. These techniques are used instead of or in addition to the injection technique described hereinabove with reference to Fig. 25D. In these techniques, after membrane 222 has been lifted from the top of ridge 200, as described hereinabove with reference to Fig. 25C, the surgeon forms a second bore through the ridge at a second bore location, e.g., using a dental drill. The second bore location is typically at least 1 mm, such as at least 2 mm or at least 3 mm, from a first bore location of the bore described hereinabove with reference to Fig. 25C. The surgeon injects regenerative material 230 into cavity 220, typically using a separate syringe 246 or powered drug delivery device, via a supply line 248.

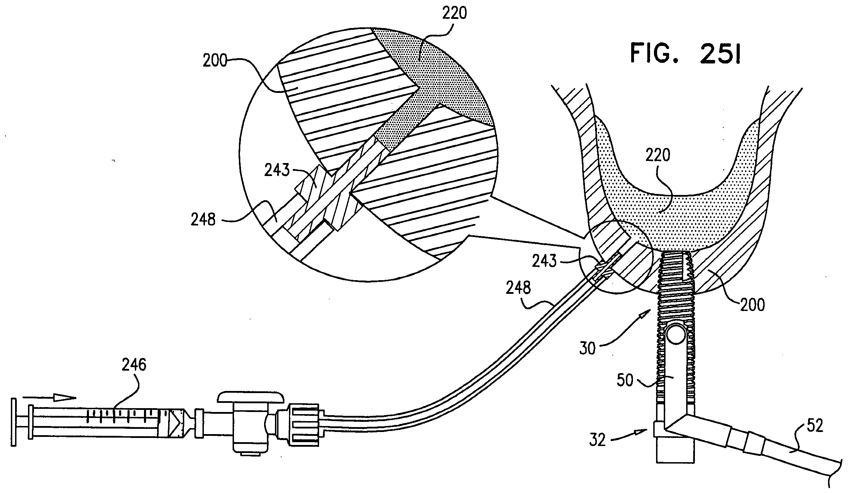

For some applications, as shown in Figs. 25H and 25I, the surgeon injects the regenerative material by inserting an adaptor 243 into the second bore. The adaptor is shaped so as to define a channel therethrough. Supply line 248 is coupled to the proximal end of the channel. For example, adaptor 243 may be threaded, as shown in Fig. 25H, in which case the surgeon screws the adaptor into the second bore. In this configuration, adaptor 243 is typically rigid, and may comprise a metal. Alternatively, the adaptor may not be threaded, as shown in Fig. 25I, in which case the surgeon presses the adaptor into the second bore. In this configuration, the adaptor may be rigid (e.g., may comprise a metal) or flexible (e.g., may comprise rubber). Optionally, the adaptor is conical.

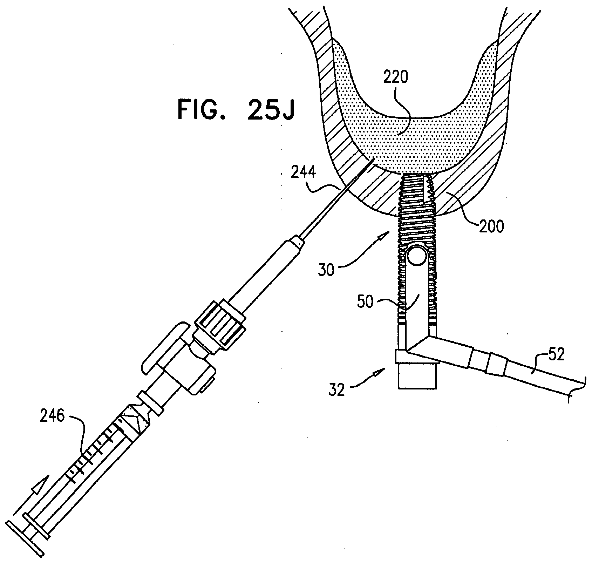

For other applications, the surgeon injects the regenerative material using a needle 244, as shown in Fig. 25J. The surgeon may form the second bore using a dental drill, or form the second bore directly using the needle. For still other applications, the surgeon injects the material through a channel of a drill bit.

Insertion of the regenerative material through a separate bore allows the use of an implant having a narrower lumen 40 and/or delivery tube 50, because the lumen and delivery tube need only allow passage of the fluid as described hereinabove with reference to Fig. 25C, and not the regenerative material, which is generally more viscous than the fluid.

For some applications, the sinus lift is performed using a conventional surgical drill with irrigation, such as internal irrigation, as is known in the art and commercially available. The regenerative material is injected through a second bore, as described hereinabove with reference to Figs. 25H-J. In addition to allowing the use of a narrower lumen through the drill bit, insertion of the regenerative material through a separate bore allows the use of a narrower drill bit for performing the sinus lift through the first bore.

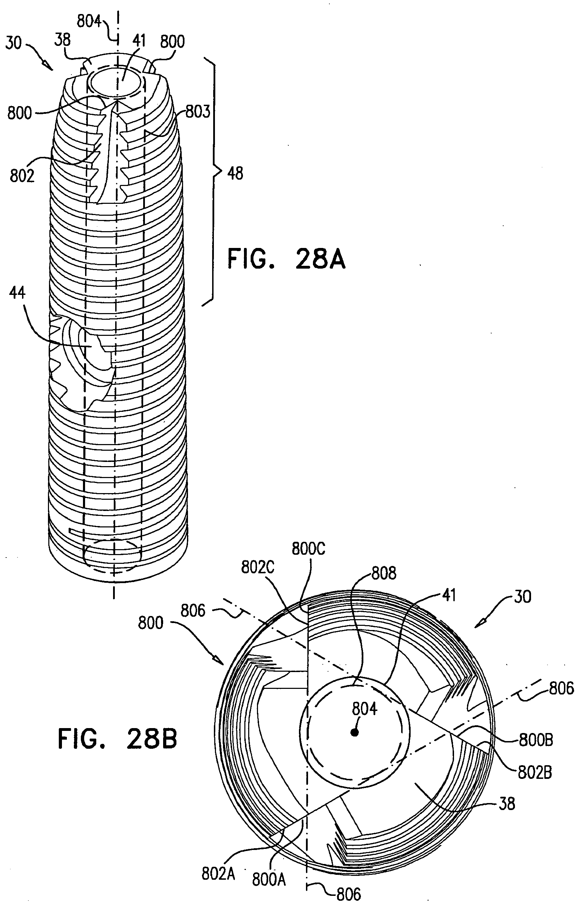

Reference is made to Figs. 26A-B, which are schematic illustrations of several steps of another minimally-invasive closed sinus lift surgical procedure for implanting dental implant 30, in accordance with an application of the present invention. The procedure is typically employed when a patient's maxillary alveolar ridge lacks sufficient bone mass to support a conventional dental implant. The procedure is particularly appropriate for implanting the configuration of implant 30 described hereinabove with reference to Figs. 19A-C and 20, optionally in combination with one or more of the features described hereinabove with reference to Figs. 2A-C and/or 28A-B.

A surgeon begins the procedure by drilling a preliminary bore portion in maxillary alveolar ridge 200, such as described hereinabove with reference to Fig. 25A. After drilling the preliminary bore portion, the surgeon advances dental implant 30 into the bore by screwing the implant into ridge 200 using surgical rotation tool 90 (such as described hereinabove with reference to Figs. 1A and 1C), as shown in Fig. 26A. In this application, at this stage of the procedure, delivery tube 50 is not yet coupled to implant 30. Because delivery tube 50 is not coupled to the implant, the surgeon can readily rotate the implant even if adjacent teeth are present. This enables implantation of the implant with the same intra-teeth distance possible in conventional implantation procedures of conventional implants.

The surgeon typically screws the implant until distal implant end 38 reaches the end of the osteotomy. The surgeon then advances the implant slightly (typically, by about one additional rotation), causing the implant to break through the top of ridge 200 to below Schneiderian membrane 222, thereby bringing distal opening(s) 41 into fluid communication with a surface of the membrane facing ridge 200, as shown in Fig. 26A. Distal implant end 38 typically does not pass through the top of ridge 200, at least at this stage in the procedure. It is noted that, if necessary to reach sufficient depth for the distal end of the implant to reach the top of the ridge, the surgeon may advance the implant so far as to advance all or a portion of lateral opening 44 into ridge 200. The implant is subsequently withdrawn in order to enable access to lateral opening 44, as described hereinbelow with reference to Figs. 26B.

Optionally, after the initial insertion of the implant into the bore, the surgeon uses a periapical radiograph to estimate remaining distance from implant tip to the sinus floor. The surgeon rotates the implant to penetrate into the sinus, such as by rotating the implant by a number of rotations equal to the remaining distance divided by a constant, e.g., 1.2 mm. Optionally, the surgeon performs an additional periapical radiograph to ensure that the implant has penetrated into the sinus cavity.

The surgeon ensures that upon the final rotation of implant 30, lateral opening 44 faces either in a lingual or buccal direction, in order to provide access to the opening for coupling the retaining element, as described immediately hereinbelow.

After the implant has been advanced to membrane 222, the surgeon decouples rotation tool 90 from applicator 32, and couples retaining element 170 (described hereinabove with reference to Figs. 19A-C and 20) to applicator 32, as shown in Fig. 26B. Supply tube 52 is coupled to the proximal end of delivery tube 50. At the initial time of coupling of retaining element 170 to applicator 32, the retaining element is in its second position, in which the distal end of delivery tube 50 is not coupled to implant 30, as described hereinabove with reference to Figs. 19A-C. The surgeon then transitions retaining element 170 to its first position, thereby coupling the distal end of the delivery tube to the implant, as described hereinabove with reference to Fig. 20.

The surgeon gently lifts and separates membrane 222 from the top of ridge 200 into a maxillary sinus 228, by injecting a fluid 229, such as a biocompatible solution such as normal saline solution or a gas, from fluid source 54 (optionally, under controlled pressure) via supply tube 52, delivery tube 50, and lumen 40, so as to form a cavity 220 under the membrane between the ridge and the membrane (in Fig. 26B, the membrane is shown partially raised). Typically, the surgeon injects sufficient fluid 229 into cavity 220 to inflate the cavity to a vertical height of between about 2 and about 20 mm from the top of ridge 200, such as between about 2 and about 11 mm, e.g., between about 2 and about 8 mm. For some applications, a measured volume of fluid 229 is injected in order to achieve the desired cavity height, such as between about 0.5 and about 6 ml of fluid, e.g., between about 1 and about 4 ml, between about 1 and about 3 ml, or between about 2 and about 4 ml.

For some applications, the surgeon detects that membrane 222 has detached from the top of ridge 200 by observing blood within fluid 229, such as saline solution, returning from the sinus, as described hereinabove with reference to Fig. 25C.

For some applications, the fluid is drained from the cavity, and the surgeon injects a regenerative material 230, such as liquid or gel bone graft, into cavity 220, as described hereinabove with reference to Fig. 25D, *mutatis mutandis.* Alternatively, for some applications, regenerative material 230 is not injected into the cavity, i.e., the step of the procedure described hereinabove with reference to Fig. 25D is omitted. Fluid 229, which may comprise saline solution, is left in cavity 220, or, alternatively, is drained from the cavity. Further alternatively, instead of injecting regenerative material 230, the surgeon injects an alternative therapeutic material, such as one or a mixture of more than one of the following materials: a bone growth stimulating substance, such as a bone morphogenetic protein (BMP), and blood. Still further alternatively, the surgeon injects regenerative material 230, rather than fluid 229, to lift membrane 222. In this case, the regenerative material typically comprises a liquid.

The surgeon transitions retaining element 170 back to its second position, as described hereinabove with reference to Figs. 19A-C, and decouples the retaining element from implant 30. After decoupling delivery tube 50 from implant 30, the surgeon further advances (e.g., by rotating or screwing) implant 30 into regenerative material 230 in cavity 220, as described hereinabove with reference to Fig. 25F. As described hereinabove with reference to Fig. 25G, after bone grows in cavity 220 (into regenerative material 230, if injected) and is integrated into ridge 200, an appliance 140, such as a crown, is coupled to implant 30, typically using an abutment 242 coupled to implant 30, as is known in the art. Alternatively, as mentioned above, implant 30 comprises a single-stage transgingival implant/abutment, as is known in the art.

Optionally, the procedure is performed in combination with the techniques described hereinabove with reference is made to Figs. 25H-J.

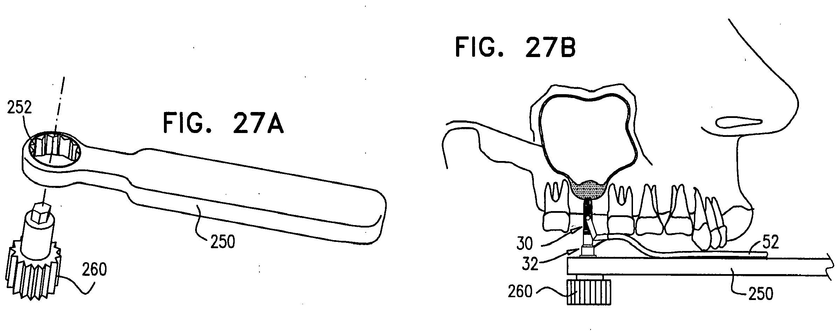

Reference is made to Figs. 27A and 27B, which are schematic illustrations of tools and techniques, respectively, for decoupling delivery tube 50 from implant 30, in accordance with an application of the present invention. These tools and techniques are particularly useful for the configuration of delivery tube 50, implant 30, and applicator 32 described hereinabove with reference to Figs. 21A-24.

Fig. 27A shows a stabilization tool 250 and a driver tool 260. A distal end of the stabilization tool is shaped so as to define a coupling opening 252, having, for example, an internal hex width of 6.35 mm. Driver tool 260 may be a conventional hand driver having a hex width of 2.4 mm, for example. For some applications, driver tool 260 is coupled to stabilization tool 250 within coupling opening 252, such that the driver tool is rotatable with respect to the distal end of the stabilization tool.

As shown in Fig. 27B, the surgeon stabilizes applicator 32 by coupling stabilization tool 250 to the proximal end of the applicator. Applicator 32, as shown hereinabove in Figs. 21A-D and 22A-B, comprises an applicator body, which comprises rotatable surface 92 accessible from the proximal end of the applicator. Applicator 32 is also shaped so as to define a stabilization surface 154 accessible from the proximal end of the applicator. Application of a stabilizing force to stabilization surface 154 stabilizes the implant during rotation of rotatable surface 92. As a result, the decoupling of delivery tube 50 from implant 30 does not dislodge or misalign the implant, which has been precisely placed in a bore in the ridge, as described hereinabove with reference to Fig. 25B. Furthermore, application of the stabilizing force reduces or prevents the transfer of force to the bone from tools operating on the applicator and/or implant.

The outer diameter (or width, such as if the surface is hexagonal) of the stabilizing surface is approximately equal to the internal diameter (or width) of coupling opening 252 of stabilization tool 250, and the stabilizing surface and coupling opening have corresponding shapes.

The surgeon positions stabilization tool 250 such that coupling opening 252 is removably coupled to stabilization surface 154, and applies the stabilizing force to stabilization surface 154. For example, both the coupling opening and the stabilization surface may be hexagonal. Typically, rotatable surface 92 and stabilization surface 154 are configured to facilitate on-axis rotation of the rotatable surface, thereby minimizing any off-axis force that the rotation may cause the apparatus to apply to its surroundings.

In order to decouple delivery tube 50 from implant 30 by breaking thinner portion 72 of the delivery tube, while the stabilization tool stabilizes the applicator, the surgeon removably couples a driver tool 260 to rotatable surface 92 of applicator 32 through opening 252 of stabilization tool 250, and rotates the driver tool, thereby rotating the rotatable surface and breaking thinner portion 72, as described hereinabove with reference to Figs. 21A-24. For example, driver tool 260 may be a conventional dental hand driver having a hex width of 2.4 mm.

Reference is made to Figs. 27C and 27D-E, which are schematic illustrations of a tool and techniques for decoupling applicator 32 from implant 30, respectively, in accordance with an application of the present invention. This tool and these techniques are particularly useful for the configuration of delivery tube 50, implant 30, and applicator 32 described hereinabove with reference to Figs. 21A-24.

Fig. 27C shows a driver tool 262, such as a conventional hand driver having a hex width of 1.25 mm, for example.

As shown in Fig. 27D, the surgeon decouples applicator 32 from implant 30 by inserting driver tool 262 into the head of connecting screw 98, described hereinabove with reference to Figs. 21A-24. The surgeon rotates driver tool 262 (typically counterclockwise) to unscrew connecting screw 98, thereby decoupling applicator 32 from implant 30. Typically, stabilizing tool 250 remains coupled to stabilization surface 154 of implant 30 during this decoupling. Fig. 27E shows the applicator after it has been decoupled from the implant, leaving the implant in place in the ridge.

For some applications, the techniques described herein are used for performing nasal floor elevation, *mutatis mutandis,* in order to implant a dental implant in the incisor position. A bore is formed through a maxillary alveolar ridge in a region of the upper incisors from the front side, and the implant is inserted into the bore at least until the distal opening comes into fluid communication with a surface of a nasal floor membrane facing the ridge. The membrane is raised to form a cavity between the ridge and the membrane.

For some applications, the techniques described herein are used with an inclined entry, for patients in which the residual bone of the maxillary alveolar ridge is too thin to achieve stability. A bore is formed with an inclined entry at a location adjacent the site of the implant where there is sufficient bone, and sinus lift is performed via the bore using the techniques described herein, *mutatis mutandis.* For some applications, the bore is formed using a biodegradable drilling element that is configured to biodegrade as the regenerative material integrates with the native bone. Regenerative material is injected into the cavity between the ridge and the Schneiderian membrane. Prior to or after the material integrates, a second straight bore is made at the desired implant location through the thin preexisting bone and into the regenerative material or new bone, and a conventional implant is inserted into the bore.

For some applications, the techniques described herein are used with a palatal entry. A bore is formed in the palate (which is thicker than the maxillary alveolar ridge), and sinus lift is performed via the bore using the techniques described herein, *mutatis mutandis.* For some applications, the bore is formed using a biodegradable drilling element that is configured to biodegrade as the regenerative material integrates with the native bone. The drilling element is withdrawn or allowed to biodegrade. Regenerative material is injected into the cavity between the ridge and the Schneiderian membrane. Prior to or after the material integrates, a second bore is made at the desired implant location through the maxillary alveolar ridge and the new bone, and a conventional implant is inserted into the bore.

For some applications, the regenerative material comprises a composition comprising solid bone graft particles mixed with a physiological solution, such as saline solution, blood, or diluted blood. For example, the solid bone graft particles may comprise freeze-dried bone allograft (FDBA). Typically, the volume concentration of the particles in the composition before filtering is less than 50%, e.g., less than 25%, such as between about 10% and about 20%, as described below. For some applications, two bores are formed through the maxillary alveolar ridge to below the Schneiderian membrane. The regenerative material is injected though a first bore, and at least a portion of the physiological solution drains through a filter in (or in communication with) the second bore, leaving at least a portion of solid bone graft particles in a cavity formed between the ridge and the membrane. Typically, the volume concentration of the particles in the composition after filtering is greater than 50%, e.g., between about 80% and about 100%. For some applications, this technique is used for bones other than the maxillary alveolar ridge, such as a mandibular alveolar ridge.

Reference is made to Figs. 28A-B, which are schematic lateral and head-on illustrations, respectively, of a configuration of a distal surface of dental implant 30, in accordance with an application of the present invention. For some applications, this configuration is used for implants described hereinabove with reference to Figs. 1A-C, 2A-C, 3A-D, 4A-B, 15-18, 19A-20, and/or 21A-24. As described hereinabove with reference to Figs. 1A-C, implant 30 is shaped so as to define a lumen therethrough that is open through at least one distal opening 41 to distal portion 48 of the implant that extends from distal implant end 38 of the implant along up to 50% of a longitudinal length of the implant. Typically, the at least one opening is located at the center of the distal implant end.

In the present configuration, distal portion 48 is shaped so as to define at least one surface selected from the group consisting of: at least one end mill cutter surface 800, at least one self-tapping surface 802, and both the at least one end mill cutter surface and the at least one self-tapping surface (as shown in Figs. 28A-B). Unlike conventional end mill and self-tapping surfaces, the end mill cutter and self-tapping surfaces do not extend into a central area of the implant that defines the lumen. This confining of the surfaces to the outer area of the implant accommodates the distal opening and lumen. For some applications, the end mill and self-tapping surfaces do not extend into a cylindrical area 803, a central axis of which coincides with a central axis 804 of the implant, and which area extends along the entire length of the implant. Cylindrical area 803 typically has a diameter of at least 0.3 mm, such as at least 0.5 mm, or at least 1.5 mm. For some applications, the diameter of the lumen is between 0.3 and 2 mm, such as between 0.5 and 2 mm, e.g., between 1.5 and 1.6 mm. For some applications, the greatest diameter of the implant (i.e., the diameter of the implant at its widest portion) is no more than 5 mm, such as no more than 4.2 mm, or is between 3 and 6.5 mm.

The end mill cutter surface creates bone fragments and bone dust that protects the Schneiderian membrane or periosteal tissue as the implant is advanced through the bone. In addition, the end mill cutter surface grinds the bone of the ridge, which is generally effective for breaking through bone. Distal portion 48 both engages the lower portion of the bone while at the same time breaking through the upper portion of the bone.

For some applications, end mill cutter surface 800 is shaped so as to define exactly two, exactly three, exactly four, exactly five, or exactly six cutting surfaces. For example, in the configuration shown in Figs. 28A and 28B, end mill cutter surface 800 defines exactly three cutting surfaces 800A, 800B, and 800C, i.e., is tripartite, and self-tapping surface 802 defines exactly three self-tapping surfaces 802A, 802B, and 802C. Typically, the cutting surfaces are distributed evenly about a central axis 804 of the implant, offset from the center. Lines 806 respectively defined by the cutting surfaces are typically tangential to a circle 808 having a center which is intersected by central axis 804 of the implant (the circle may or may not have the same radius as distal opening 41). Thus, for example, for applications in which the end mill cutter surface defines exactly two cutting surfaces 802, lines 806 are parallel to one another; for applications in which the end mill cutter surface defines exactly three cutting surfaces 802, lines 806 form a triangle; and, for application in which the end mill cutter surface defines exactly four cutting surfaces 802, lines 806 form a square.

For some applications, distal portion 48 is shaped so as to define a conical cross-section that is configured to cause bone condensation, which generally improves bone density.

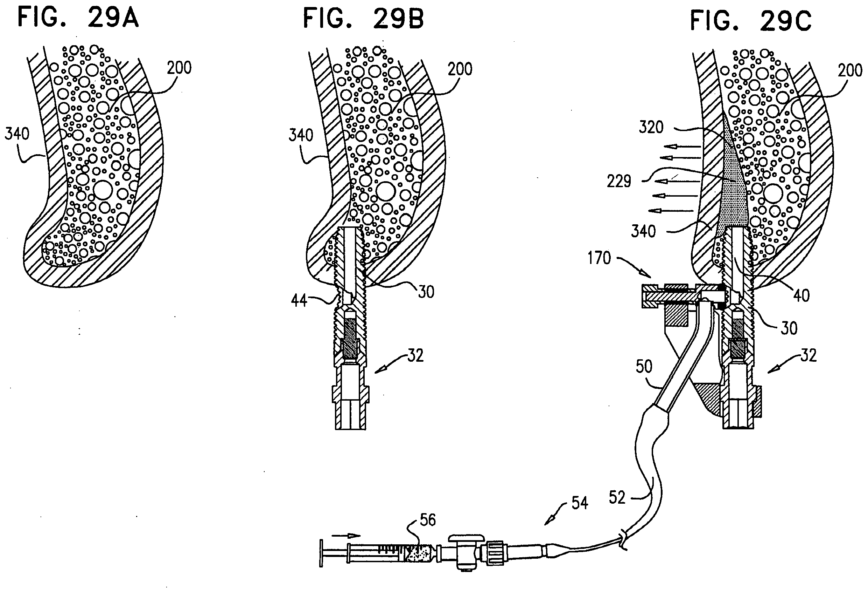

Reference is made to Figs. 29A-F, which are schematic illustrations of several steps of a minimally-invasive closed lateral ridge augmentation surgical procedure for implanting dental implant 30, in accordance with an application of the present invention. The procedure is typically employed when a patient's maxillary or mandibular alveolar ridge 200 lacks sufficient bone width to support a dental implant, as shown in Fig. 29A. For example, the procedure may be employed for implanting an implant to replace the upper canines, lower molars, upper incisors, or lower incisors.

The lateral ridge augmentation procedure may be performed with the configuration of implant 30 described hereinabove with reference to Figs. 19A-20 (as shown in and described hereinbelow with reference to Figs. 29A-F), or with the configuration of implant 30 described hereinabove with reference to Figs. 15-18. Alternatively the lateral ridge augmentation procedure may be performed with the configuration of implant 30 described hereinabove with reference to Figs. 1A-3D, in which case the techniques described hereinbelow with reference to Figs. 29A-F are performed in combination with the techniques described hereinabove with reference to Figs. 25A-G. Further alternatively, the lateral ridge augmentation procedure may be performed with the configuration of implant 30 described hereinabove with reference to Figs. 21A-24, in which case the techniques described hereinbelow with reference to Figs. 29A-F are performed in combination with the techniques described hereinabove with reference to Figs. 27A-E. This closed lateral ridge augmentation surgical procedure may be performed in combination with other techniques described herein. For some applications, the distal opening of the lumen is located on a lateral surface of the implant near the distal end, rather than on the distal end itself.

A surgeon begins the procedure by preparing the oral facial region, and administering a local anesthetic. Optionally, the surgeon initiates an osteotomy in alveolar ridge 200 by making a preliminary portion of a bore using a dental drill, such as a conventional sinus bur. This preliminary bore portion typically has a diameter of between about 1 and about 7 mm, e.g., between about 2 and about 6 mm. Optionally, the surgeon widens the bore using a series of successively wider drill bits, until a desired bore diameters is achieved (for example, the largest drill bit may have a diameter of 3.65 mm for an implant having a diameter of 4.2 mm, or a diameter of 4.2 mm for an implant having a diameter of 5 mm). The bore may be measured using techniques known in the art, such as CT, x-ray, or x-ray with a depth guide. For some applications, a surgical guide is used to ensure clearance between the center of the osteotomy and the nearest tooth surfaces. Optionally, a pre-surgery radiograph (e.g., CT or x-ray) is performed, to enable the surgeon to estimate the necessary depth of the osteotomy.

After drilling the preliminary bore portion, the surgeon advances dental implant 30 into the bore by screwing the implant into ridge 200 using surgical rotation tool 90 coupled to applicator 32, as described hereinabove with reference to Figs. 1A and 1C.

As shown in Fig. 29B, the surgeon inserts implant 30 into the bore at least until the distal opening comes into fluid communication with periosteal tissue 340 covering a lateral surface of the bone.

After the implant has been advanced, the surgeon decouples rotation tool 90 from applicator 32, and couples retaining element 170 (described hereinabove with reference to Figs. 19A-C and 20) to applicator 32, as shown in Fig. 29C. Supply tube 52 is coupled to the proximal end of delivery tube 50. At the initial time of coupling of retaining element 170 to applicator 32, the retaining element is in its second position, in which the distal end of delivery tube 50 is not coupled to implant 30, as described hereinabove with reference to Figs. 19A-C. The surgeon then transitions retaining element 170 to its first position, thereby coupling the distal end of the delivery tube to the implant, as described hereinabove with reference to Fig. 20.

The surgeon delaminates periosteal tissue 340 from the bone by injecting fluid 229 from fluid source 54 via supply tube 52, delivery tube 50, and lumen 40 of the implant, to form a cavity 320 between the bone and periosteal tissue 340, as shown in Fig. 29C.

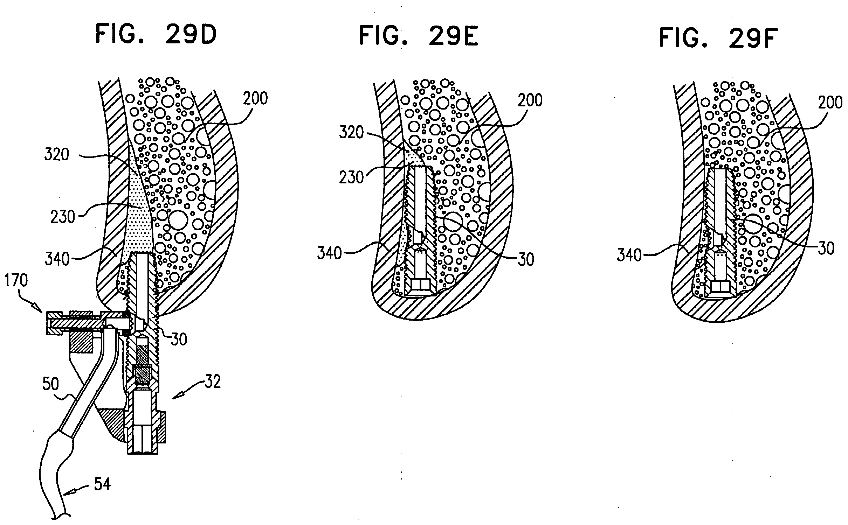

For some applications, the fluid is drained from the cavity, and the surgeon injects a regenerative material 230, such as liquid or gel bone graft, into cavity 320, as shown in Fig. 29D. Fluid source 54 or a separate syringe or powered drug delivery device is used for injecting the regenerative material. If a separate syringe or device is used to inject the material, the material may be provided via supply tube 52, or via a separate supply tube. Regenerative material 230 may comprise any of the materials mentioned hereinabove with reference to 25DOptionally, the system monitors and generates an output indicative of the pressure of the regenerative material as it is injected. Alternatively, for some applications, regenerative material 230 is not injected into the cavity. Fluid 229, which may comprise saline solution, is left in cavity 320, or, alternatively, is drained from the cavity. Further alternatively, instead of injecting regenerative material 230, the surgeon injects an alternative therapeutic material, such as one or a mixture of more than one of the following materials: a bone growth stimulating substance, such as a bone morphogenetic protein (BMP), and blood. Still further alternatively, the surgeon injects regenerative material 230, rather than fluid 229, to delaminates periosteal tissue 340. In this case, the regenerative material typically comprises a liquid.

For some applications, the system measures the volume of fluid 229 injected into the cavity while forming the cavity, at the step of the procedure described hereinabove with reference to Figs. 29C. Responsively to the measured volume, the surgeon determines an amount of regenerative material 230 to inject into cavity 320 at the step of the procedure described hereinabove with reference to Fig. 29D. Typically, the amount of regenerative material 230 is approximately equal to the volume of injected fluid 229, or slightly greater or less than the volume of the injected fluid. As a result, waste of regenerative material 230 is generally minimized.

For some applications, the surgeon uses a flexible wire as a piston to help push the regenerative material through the supply tubes and/or lumen. This technique may be helpful when the regenerative material is viscous and thus difficult to inject using an ordinary syringe.

The surgeon transitions retaining element 170 back to its second position, as described hereinabove with reference to Figs. 19A-C, and decouples the retaining element from implant 30. After decoupling delivery tube 50 from implant 30, the surgeon further advances (e.g., by rotating or screwing) implant 30 into regenerative material 230 in cavity 320, as shown in Fig. 29E. This additional advancing of the implant advances the lateral surface of implant 30 at least until lateral opening 44 is positioned entirely within the bore in ridge 200 and/or in regenerative material 230 in cavity 320. Such positioning of both ends of the lumen within bone substantially reduces the risk of infection, because the proximal end of implant 30 that is exposed to the oral cavity or gingiva is permanently closed.

The surgeon decouples applicator 32 from implant 30, such as by pulling the male coupling element out of the female coupling element, or using the tool and techniques described hereinabove with reference to Fig. 27C-E. Typically, the surgeon couples a cover screw to the proximal end of the implant using a hand driver, and sutures the gingiva.

As shown in Fig. 29F, bone grows in cavity 220 (into regenerative material 230, if injected) and is integrated into ridge 200. Thereafter, an appliance, such as a crown, is coupled to implant 30, typically using an abutment coupled to the implant, as is known in the art. Alternatively, implant 30 comprises a single-stage transgingival implant/abutment, as is known in the art.

In an experiment conducted by the inventors, 16 implants similar to the implant described hereinabove with reference to Figs. 1A-C were implanted in 11 human patients, using a procedure similar to that described hereinabove with reference to Figs. 25A-G (five of the 11 patients received bilateral implants). All 16 of the implants were fully successful; the implants were placed in their planned positions, and the membranes were successfully elevated according to plan. No adverse events, such as perforation of the membrane, were observed. As of the filing date of the present application, one of the patients reached the three-month follow-up milestone and exhibits excellent formation of new bone.

## Claims

1. Apparatus comprising:
a dental implant (30) having a lateral external surface (42), the implant (30) being shaped so as to define a lumen (40) therethrough, the lumen having a lateral opening (44) through the lateral external surface (42) and at least one distal opening through a distal external surface of a distal implant portion (48) that extends from a distal implant end (38) along up to 50% of a longitudinal length of the implant (30), and the lumen is not open to a proximal external surface of the implant within 2 mm of a proximal-most part of the implant (30), the lateral opening (44) arranged so that the dental implant (30) is rotatable to bring the lateral opening (44) entirely within (a) a bore in a maxillary alveolar ridge (200) and/or (b) a cavity (220) between the ridge (200) and a Schneiderian membrane (222);
a delivery tube (50) having a distal tube end;
a retaining element (170), which is configured to assume (a) a first position in which the retaining element (170) removably couples the distal tube end to the implant (30) such that the delivery tube (50) is in fluid communication with the lumen (40) via the lateral opening (44), and (b) a second position in which the retaining element (170) does not couple the distal tube end to the implant (30); and
a sealing element, which is configured to removably sealingly couple the delivery tube (50) to the implant (30).

2. The apparatus according to claim 1, wherein the sealing element comprises an o-ring or a gasket.

3. The apparatus according to claim 1 or 2, wherein the retaining element (170) is removably coupled to a proximal implant end of the implant (30), and coupled to the delivery tube (50).

4. The apparatus according to claim 1 or 2, further comprising an applicator (32), which is removably coupled to a proximal implant end (34) of the implant (30), wherein the retaining element (170) is removably couplable to the applicator (32), and coupled to the delivery tube (50).

5. The apparatus according to claim 4, wherein the retaining element (170) comprises a retaining element body (172), which is configured to be disposed alongside the implant (30) from the applicator (32) to the lateral opening (44) of the implant (30).

6. The apparatus according to claim 5, wherein the retaining element (170) further comprises a shaft (180), which is configured (a) to sealingly couple the distal tube end to the lateral opening (44) of the implant (30), and (b) such that rotation of the shaft (180) brings the distal tube end into contact with the lateral opening (44) of the implant (30), to sealingly couple the distal tube end to the lateral opening (44).

7. The apparatus according to claim 6, wherein the shaft (180) is oriented such that a longitudinal axis thereof forms an angle of 90 degrees with a longitudinal axis of the implant (30).

8. The apparatus according to claim 6,
wherein an external surface of a portion of the shaft (180) is shaped so as to define a screw thread (188), which passes through a lumen of the retaining element body (172) that is shaped so as to define a corresponding screw thread, and
wherein an end of the shaft (180) is shaped so as to define a knob 190, for facilitating rotation of the shaft (180).

9. The apparatus according to claim 5, wherein the retaining element (170) further comprises a shaft (180), a first end of which serves as the distal tube end, which shaft (180) is configured to sealingly couple the distal tube end to the lateral opening (44) of the implant (30).

10. The apparatus according to claim 1 or 2, further comprising an applicator (32), which is removably coupled to a proximal implant end (34) of the implant (30), wherein the retaining element (170) is fixed to the applicator (32), and coupled to the delivery tube (50).

11. The apparatus according to claim 1 or 2, wherein a proximal implant end (34) of the implant (30) is configured to be coupled to an abutment (242).

12. The apparatus according to claim 11, further comprising the abutment (242).

13. The apparatus according to claim 1 or 2, wherein the implant (30) is shaped so as to define an integrated abutment.

14. The apparatus according to claim 1 or 2, wherein the lumen is not open to the proximal external surface within 3 mm of the proximal-most part of the implant (30).

## Patentansprüche

1. Vorrichtung umfassend:
ein Dentalimplantat (30) mit einer seitlichen Außenfläche (42), wobei das Implantat (30) so geformt ist, dass durch dieses hindurch ein Lumen (40) festlegt wird, wobei das Lumen eine seitliche Öffnung (44) durch die seitliche Außenfläche (42) hat sowie mindestens eine distale Öffnung durch eine distale Außenfläche eines distalen Implantat-Abschnittes (48) hat, der sich von einem distalen Ende des Implantats (38) bis zu 50% entlang einer longitudinalen Länge des Implantats (30) erstreckt, und das Lumen zu einer proximalen Außenfläche des Implantats innerhalb von 2 mm von einem am weitesten proximalen Teil des Implantats (30) nicht offen ist, wobei die seitliche Öffnung (44) so angeordnet ist, dass das Dentalimplantat (30) drehbar ist, um die seitliche Öffnung (44) vollständig in (a) eine Bohrung in einem Kieferkamm (200) und/oder (b) einen Hohlraum (220) zwischen dem Kieferkamm (200) und einer Schneider-Membran (222) einzubringen;
ein Zuführrohr (50) mit einem distalen Rohrende;
ein haltendes Element (170), das konfiguriert ist, um eine erste Position (a) einzunehmen, in der das haltende Element (170) das distale Rohrende mit dem Implantat (30) derart lösbar verbindet, dass das Zuführrohr (50) über die seitliche Öffnung (44) in fluider Kommunikation mit dem Lumen (40) steht, und (b) eine zweite Position einzunehmen, in der das haltende Element (170) das distale Rohrende nicht mit dem Implantat (30) verbindet; und
ein dichtendes Element, das konfiguriert ist, um das Zuführrohr (50) mit dem Implantat (30) lösbar abgedichtet zu verbinden.

2. Vorrichtung nach Anspruch 1, wobei das dichtende Element einen o-Ring oder eine Flachdichtung umfasst.

3. Vorrichtung nach Anspruch 1 oder 2, wobei das haltende Element (170) entfernbar mit einem proximalen Implantat-Ende des Implantats (30) und mit dem Zuführrohr (50) verbunden ist.

4. Vorrichtung nach Anspruch 1 oder 2, ferner umfassend einen Applikator (32), der mit einem proximalen Implantat-Ende (34) des Implantats (30) entfernbar verbunden ist, wobei das haltende Element (170) mit dem Applikator (32) lösbar verbindungsfähig und mit der Zuführrohr (50) verbunden ist.

5. Vorrichtung nach Anspruch 4, wobei das haltende Element (170) einen Körper (172) des haltenden Elements aufweist, der so konfiguriert ist, um entlang des Implantats (30) von dem Applikator(32) zu der lateralen Öffnung (44) des Implantats (30) angeordnet zu werden.

6. Vorrichtung nach Anspruch 5, wobei das haltende Element (170) ferner eine Welle (180) umfasst, die konfiguriert ist, um (a) das distale Rohrende mit der lateralen Öffnung (44) des Implantats (30) abgedichtet zu verbinden und (b) derart, dass die Drehung der Welle (180) das distale Rohrende in Kontakt mit der seitlichen Öffnung (44) des Implantats (30) bringt, um das distale Rohrende mit der lateralen Öffnung (44) abgedichtet zu verbinden.

7. Vorrichtung nach Anspruch 6, wobei die Welle (180) so orientiert wird, dass eine Längsachse von ihr einen Winkel von 90° mit einer Längsachse des Implantats (30) bildet.

8. Vorrichtung nach Anspruch 6,
wobei eine Außenseite eines Abschnitts der Welle (180) so geformt ist, dass sie ein Schraubgewinde (188) festlegt, das ein Lumen des Körpers (172) des haltenden Elements passiert, der so geformt ist, dass er ein korrespondierendes Schraubgewinde festlegt, und
wobei ein Ende der Welle (180) so geformt ist, dass es einen Knopf (190) festlegt, um die Drehung der Welle (180) zu erleichtern.

9. Vorrichtung nach Anspruch 5, wobei das haltende Element (170) ferner eine Welle (180) umfasst, deren erstes Ende als das distale Rohrende dient, wobei die Welle (180) konfiguriert ist, um das distale Rohrende mit der lateralen Öffnung (44) des Implantats (30) abgedichtet zu verbinden.

10. Vorrichtung nach Anspruch 1 oder 2, ferner umfassend einen Applikator (32), der entfernbar mit einem proximalen Implantat-Ende (34) des Implantats (30) verbunden ist, wobei das haltende Element (170) an dem Applikator (32) fest angeordnet ist und mit dem Zuführrohr (50) verbunden ist.

11. Vorrichtung nach Anspruch 1 oder 2, wobei ein proximales Implantat-Ende (34) des Implantats (30) konfiguriert ist, um mit einem Abutment (242) verbunden zu werden.

12. Vorrichtung nach Anspruch 11, ferner umfassend das Abutment (242).

13. Vorrichtung nach Anspruch 1 oder 2, wobei das Implantat (30) so geformt ist, dass es ein integriertes Abutment festlegt.

14. Vorrichtung nach Anspruch 1 oder 2, wobei das Lumen zu der proximalen Außenfläche innerhalb von 3 mm von dem am weitesten proximalen Abschnitt des Implantats (30) nicht offen ist.

## Revendications

1. Appareil, comprenant :
un implant dentaire (30) comportant une surface externe latérale (42), l'implant (30) étant formé de sorte à définir une lumière le traversant (40), la lumière comportant une ouverture latérale (44) traversant la surface latérale externe (42) et au moins une ouverture distale traversant une surface externe distale d'une partie d'implant distale (48) s'étendant à partir d'une extrémité d'implant distale (38) le long d'une longueur longitudinale de l'implant (30), sur 50 % de celle-ci, et la lumière n'étant pas ouverte vers une surface externe proximale de l'implant dans le cadre de 2 mm d'une partie proximale extrême de l'implant (30), l'ouverture latérale (44) étant agencée de sorte que l'implant dentaire (30) peut tourner pour déplacer l'ouverture latérale (44) entièrement dans (a) un alésage dans la crête alvéolaire maxillaire (200) et/ou (b) une cavité (220) entre la crête (200) et une membrane Schneidérienne (222) ;
un tube d'administration (50) comportant une extrémité de tube distale;
un élément de retenue (170), configuré de sorte à assumer (a) une première position, dans laquelle l'élément de retenue (170) assure l'accouplement amovible de l'extrémité de tube distale à l'implant (30), de sorte que le tube d'administration (50) et en communication de fluide avec la lumière (40) à travers l'ouverture latérale (44), et (b) une deuxième position, dans laquelle l'élément de retenue (170) n'assure pas l'accouplement de l'extrémité de tube distale à l'implant (30) ; et
un élément d'étanchéité, configuré pour accoupler de manière étanche et amovible le tube d'administration (50) à l'implant (30).

2. Appareil selon la revendication 1, dans lequel l'élément d'étanchéité comprend une bague torique d'étanchéité ou un joint d'étanchéité.

3. Appareil selon les revendications 1 ou 2, dans lequel l'élément de retenue (170) est accouplé de manière amovible à une extrémité d'implant proximale de l'implant (30) et accouplé au tube d'administration (50).

4. Appareil selon les revendications 1 ou 2, comprenant en outre un applicateur (32), accouplé de manière amovible à une extrémité d'implant proximale (34) de l'implant (30), dans lequel l'élément de retenue (170) est accouplé de manière amovible à l'applicateur (32) et accouplé au tube d'administration (50).

5. Appareil selon la revendication 4, dans lequel l'élément de retenue (170) comprend un corps de l'élément de retenue (172), configuré pour être disposé le long de l'implant (30), de l'applicateur (32) vers l'ouverture latérale (44) de l'implant (30).

6. Appareil selon la revendication 5, dans lequel l'élément de retenue (170) comprend en outre un arbre (180), configuré (a) pour accoupler de manière étanche l'extrémité de tube distale à l'ouverture latérale (44) de l'implant (30), et (b) de sorte que la rotation de l'arbre (180) entraîne un contact entre l'extrémité de tube distale et l'ouverture latérale (44) de l'implant (30), pour accoupler de manière étanche l'extrémité de tube distale à l'ouverture latérale (44).

7. Appareil selon la revendication 6, dans lequel l'arbre (180) est orienté de sorte que son axe longitudinal forme un angle de 90 degrés par rapport à un axe longitudinal de l'implant (30).

8. Appareil selon la revendication 6,
dans lequel une surface externe d'une partie de l'arbre (180) est formée de sorte à définir un filet de vis (188) passant à travers une lumière du corps de l'élément de retenue (172), qui est formée de sorte à définir un filet de vis correspondant ; et
dans lequel l'extrémité de l'arbre (180) est formée de sorte à définir un bouton (190) pour faciliter la rotation de l'arbre (180).

9. Appareil selon la revendication 5, dans lequel l'élément de retenue (170) comprend en outre un arbre (180), dont une première extrémité sert d'extrémité distale du tube, cet arbre (180) étant configuré pour assurer l'accouplement étanche de l'extrémité distale du tube à l'ouverture latérale (44) de l'implant (30).

10. Appareil selon les revendications 1 ou 2, comprenant en outre un applicateur (32) accouplé de manière amovible à une extrémité d'implant proximale (34) de l'implant (30), dans lequel l'élément de retenue (170) est fixé sur l'applicateur (32) et accouplé au tube d'administration (50).

11. Appareil selon les revendications 1 ou 2, dans lequel une extrémité d'implant proximale (34) de l'implant (30) est configurée de sorte à être accouplée à une butée (242).

12. Appareil selon la revendication 11, comprenant en outre la butée (242).

13. Appareil selon les revendications 1 ou 2, dans lequel l'implant (30) est formé de sorte à définir une butée intégrée.

14. Appareil selon les revendications 1 ou 2, dans lequel la lumière n'est pas ouverte vers la surface externe proximale dans le cadre de 3 mm de la partie proximale extrême de l'implant (30).
